# EUROPEAN PATENT APPLICATION

(11) **EP 4 818 789 A1**
(43) Date of publication of application: **07.10.2026**
(21) Application number: 26161480.4
(22) Date of filing: 27.02.2026
(51) Int. Cl.: G02B 27/01, G02B 5/30

(54) **PANCHARATNAM-BERRY PHASE LENS WITH TRIPLE NOTCHED RESPONSE**

(30) Priority: 31.03.2025 US 202563781204 P; 06.01.2026 US 202619441252
(71) Applicant: Meta Platforms Technologies, LLC, Menlo Park, CA 94025 (US)
(72) Inventor: ALTAQUI, Ali, Menlo Park, 94025 (US); SCHOWENGERDT, Brian, Menlo Park, 94025 (US); WHEELWRIGHT, Brian, Menlo Park, 94025 (US); WANG, Mengfei, Menlo Park, 94025 (US); ROBBINS, Steven John, Menlo Park, 94025 (US); OH, Chulwoo, Menlo Park, 94025 (US); KIM, Jihwan, Menlo Park, 94025 (US); LU, Lu, Menlo Park, 94025 (US)
(74) Representative: Murgitroyd & Company

(57) **Abstract**

An optical system includes a Pancharatnam-Berry Phase (PBP) lens configured to diffract light at three distinct wavelengths corresponding to red, green, and blue spectra, where the PBP lens includes a multilayer structure with alternating chiral and achiral liquid crystal layers, and the PBP lens has a transparency of at least 85% to wavelengths outside the red, green, and blue spectra.

## Description

### FIELD

The present disclosure relates to optical systems, optical display systems and Pancharatnam-Berry Phase lenses.

### BACKGROUND

Virtual reality (VR), augmented reality (AR), and mixed reality (MR) eyewear devices and headsets enable users to experience events, such as interactions with people in a computer-generated simulation of a three-dimensional world or viewing data superimposed on a real-world view. Superimposing information onto a field of view may be achieved through an optical head-mounted display (OHMD) or by using embedded wireless glasses with a transparent heads-up display (HUD) or augmented reality overlay. VR/AR/MR eyewear devices and headsets may be used for a variety of purposes. Governments may use such devices for military training, medical professionals may use such devices to simulate surgery, and engineers may use such devices as design visualization aids.

VR/AR/MR devices and headsets typically include an optical system having a microdisplay and imaging optics. In some embodiments, display light may be generated and projected to the eyes of a user using a display system where the light is in-coupled into a waveguide, transported therethrough by total internal reflection (TIR), replicated to form an expanded field of view, and out-coupled when reaching the position of a viewer's eye.

Mixed reality (MR) is a display technology that blends real and virtual worlds to create new environments where physical and digital objects coexist and may interact in real time. In contrast to virtual reality, which immerses a user completely in a digital world, and augmented reality, which overlays digital content onto a real world view, mixed reality allows for more dynamic and interactive experiences through the digitization of real world light.

Various configurations of imaging optics may be used in a mixed reality display system, for example, where the size and/or optical quality of the display are typically balanced against design complexity and cost. Different imaging optics configurations may include different pancake lens architectures. Notwithstanding recent developments, it would be advantageous to develop mixed reality display components, including the attendant optics, that are configured to provide a quality immersive experience.

### SUMMARY

According to a first aspect, there is provided an optical system comprising: a Pancharatnam-Berry Phase (PBP) lens configured to diffract light at three distinct wavelengths corresponding to red, green, and blue bands, wherein the PBP lens includes a multilayer structure with alternating chiral and achiral liquid crystal layers, and the PBP lens has a transparency of at least 85% to wavelengths outside the red, green, and blue bands.

In some embodiments, the PBP lens has a diffraction band full width at half maximum (FWHM) of 12 to 18 nm for the blue band, 20 to 25 nm for the green band, and 30 to 35 nm for the red band.

In some embodiments, the multilayer structure comprises a folded Solc architecture including three achiral liquid crystal layers of substantially equal thickness and two chiral liquid crystal layers disposed between the achiral layers, the chiral liquid crystal layers having opposite handedness with equal magnitude twist and each having a physical thickness of less than 100 nm.

In some embodiments, fast-axis orientations of the achiral liquid crystal layers are arranged in a sequence that is symmetric about a mid-plane of the multilayer structure such that orientation angles in an upper half of the multilayer structure are a mirror of orientation angles in a lower half of the multilayer structure.

In some embodiments, each achiral liquid crystal layer has a birefringence in a range of approximately 0.08 to 0.20 and a physical thickness in a range of approximately 0.8 µm to 3.0 µm, the birefringence and thickness being selected to set center wavelengths of respective red, green and blue diffraction bands.

In some embodiments, each chiral liquid crystal layer has a twist angle with respect to an adjacent achiral layer in a range of approximately ±20° to ±120° and an optical retardance of less than approximately one-quarter wave over the visible electromagnetic spectrum.

In some embodiments, the multilayer structure begins and ends with an achiral liquid crystal layer.

In some embodiments, the optical system further comprises a notched reflector disposed on a world side of the PBP lens, the notched reflector having reflection bands spectrally aligned with the red, green, and blue diffraction bands of the PBP lens so that world-side light at notched wavelengths is reflected and out-of-band wavelengths are transmitted.

According to a further aspect, there is provided an optical display system comprising a stacked optical element including: a first Pancharatnam-Berry Phase (PBP) lens; a second PBP lens; and a third PBP lens, each of the first, second, and third PBP lenses being a triple-notched diffractive lens configured to diffract light at three distinct wavelengths corresponding to red, green, and blue bands while being transparent to out-of-band wavelengths, the stacked optical element further including a first color-selective half-wave retarder disposed between the first PBP lens and the second PBP lens and a second color-selective half-wave retarder disposed between the second PBP lens and the third PBP lens.

In some embodiments, each of the first, second, and third PBP lenses comprises a multilayer liquid crystal structure having alternating achiral liquid crystal layers and chiral liquid crystal layers of opposite handedness.

In some embodiments, the achiral liquid crystal layers are configured to provide a spatially varying fast-axis orientation that imparts a geometric-phase profile, and the chiral liquid crystal layers are configured to provide sub-quarter-wave retardance with twist angles selected to shape spectral bandwidth and roll-off without substantially shifting notch centers.

In some embodiments, each achiral liquid crystal layer has a birefringence in a range of approximately 0.08 to 0.20 and a physical thickness in a range of approximately 0.8 µm to 3.0 µm, and each chiral liquid crystal layer has a physical thickness of less than 100 nm.

In some embodiments, the first and second color-selective half-wave retarders are configured to selectively modify circular polarization on a per-wavelength basis so that, for at least one of the red, green, and blue bands, light exits the first color-selective half-wave retarder with a handedness that causes the second PBP lens to provide a focusing operation and exits the second color-selective half-wave retarder with a handedness that causes the third PBP lens to provide a defocusing operation, and for at least one other of the red, green, and blue bands, light exits with an opposite handedness to invert a focusing sign of at least one of the second or third PBP lenses, such that combined optical power of the first, second, and third PBP lenses yields substantially equal effective focal lengths for the red, green, and blue bands at an exit pupil.

In some embodiments, at least one of the PBP lenses has a diffraction band full width at half maximum (FWHM) of 12 to 18 nm for the blue band, 20 to 25 nm for the green band, and 30 to 35 nm for the red band.

In some embodiments, the stacked optical element is arranged along a common optical axis in a sequence, from an eye side toward a display side, of (i) the first PBP lens, (ii) the first color-selective half-wave retarder, (iii) the second PBP lens, (iv) the second color-selective half-wave retarder, and (v) the third PBP lens, each of the PBP lenses and color-selective half-wave retarders being parallel to one another with coextensive clear apertures, and wherein spatial phase profiles of the first, second, and third PBP lenses are laterally registered about the common optical axis so that corresponding phase features are coincident across the stacked optical element.

According to a further aspect, there is provided a Pancharatnam-Berry Phase lens comprising a multilayer liquid crystal stack having alternating achiral liquid crystal layers and chiral liquid crystal layers of opposite handedness, the achiral liquid crystal layers being patterned with a spatially varying fast-axis orientation to impart a geometric-phase profile, the multilayer liquid crystal stack beginning and ending with an achiral liquid crystal layer.

In some embodiments, the multilayer liquid crystal stack is configured as a folded Solc architecture in which the fast-axis orientations of the achiral liquid crystal layers are arranged in a sequence that is symmetric about a mid-plane of the stack.

In some embodiments, each chiral liquid crystal layer is a sub-retardance twist layer disposed between adjacent achiral liquid crystal layers and is selected to tailor spectral bandwidth and roll-off without substantially shifting geometric-phase center wavelengths set by the achiral liquid crystal layers.

In some embodiments, each achiral liquid crystal layer has a birefringence in a range of approximately 0.08 to 0.20 and a physical thickness in a range of approximately 0.8 µm to 3.0 µm, and each chiral liquid crystal layer has a physical thickness of less than 100 nm.

In some embodiments, the multilayer liquid crystal stack comprises three achiral liquid crystal layers and two chiral liquid crystal layers.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a schematic drawing of a display system including a notched Pancharatnam-Berry Phase lens according to some embodiments.
FIG. 2 illustrates the architecture and performance of a triple notched Pancharatnam-Berry Phase lens including alternating chiral and achiral liquid crystal layers according to some embodiments.
FIG. 3 depicts architectural details and performance characteristics for example triple notched Pancharatnam-Berry Phase lenses according to certain embodiments.
FIG. 4 illustrates the optical performance of multilayer notched Pancharatnam-Berry Phase lenses for different layer thicknesses according to some embodiments.
FIG. 5 illustrates the optical performance of multilayer notched Pancharatnam-Berry Phase lenses for different liquid crystal twist angles according to some embodiments.
FIG. 6 illustrates the optical performance of multilayer notched Pancharatnam-Berry Phase lenses for different liquid crystal twist angles according to further embodiments.
FIG. 7 illustrates the principles of operation of a Pancharatnam-Berry Phase lens according to certain embodiments.
FIG. 8 is a schematic drawing of an example display system including a notched Pancharatnam-Berry Phase lens and a notched reflector according to some embodiments of the present disclosure.
FIG. 9 illustrates the co-integration of triple notched Pancharatnam Berry-Phase lenses with color-selective halfwave retarders for decreasing chromatic aberration in an optical display according to certain embodiments.
FIG. 10 is an example all flat birdbath combiner including a notched mirror and a notched Pancharatnam-Berry Phase lens according to some embodiments.
FIG. 11 is an example of a transparent pancake lens element including a stacked triple notched Pancharatnam-Berry Phase lens according to some embodiments.
FIG. 12 is an illustration of an example artificial-reality system according to some embodiments of this disclosure.
FIG. 13 is an illustration of an example artificial-reality system with a handheld device according to some embodiments of this disclosure.
FIG. 14A is an illustration of example user interactions within an artificial-reality system according to some embodiments of this disclosure.
FIG. 14B is an illustration of example user interactions within an artificial-reality system according to some embodiments of this disclosure.
FIG. 15A is an illustration of example user interactions within an artificial-reality system according to some embodiments of this disclosure.
FIG. 15B is an illustration of example user interactions within an artificial-reality system according to some embodiments of this disclosure.
FIG. 16 is an illustration of an example wrist-wearable device of an artificial-reality system according to some embodiments of this disclosure.
FIG. 17 is an illustration of an example wearable artificial-reality system according to some embodiments of this disclosure.
FIG. 18 is an illustration of an example augmented-reality system according to some embodiments of this disclosure.
FIG. 19A is an illustration of an example virtual-reality system according to some embodiments of this disclosure.
FIG. 19B is an illustration of another perspective of the virtual-reality system shown in FIG. 19A.
FIG. 20 is a block diagram showing system components of example artificial- and virtual-reality systems.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within this disclosure.

### DETAILED DESCRIPTION OF EXEMPLARY EMBODIMENTS

Virtual reality (VR), augmented reality (AR), and mixed reality (MR) eyewear devices and headsets enable users to experience events, such as interactions with people in a computer-generated simulation of a three-dimensional world or viewing data superimposed on a real-world view. Superimposing information onto a field of view may be achieved through an optical head-mounted display (OHMD) or by using embedded wireless glasses with a transparent heads-up display (HUD) or augmented reality overlay. VR/AR/MR eyewear devices and headsets may be used for a variety of purposes. Governments may use such devices for military training, medical professionals may use such devices to simulate surgery, and engineers may use such devices as design visualization aids.

VR/AR/MR devices and headsets typically include an optical system having a microdisplay and imaging optics. In some embodiments, display light may be generated and projected to the eyes of a user using a display system where the light is in-coupled into a waveguide, transported therethrough by total internal reflection (TIR), replicated to form an expanded field of view, and out-coupled when reaching the position of a viewer's eye.

Mixed reality (MR) is a display technology that blends real and virtual worlds to create new environments where physical and digital objects coexist and may interact in real time. In contrast to virtual reality, which immerses a user completely in a digital world, and augmented reality, which overlays digital content onto a real world view, mixed reality allows for more dynamic and interactive experiences through the digitization of real world light.

Various configurations of imaging optics may be used in a mixed reality display system, for example, where the size and/or optical quality of the display are typically balanced against design complexity and cost. Different imaging optics configurations may include different pancake lens architectures. Notwithstanding recent developments, it would be advantageous to develop mixed reality display components, including the attendant optics, that are configured to provide a quality immersive experience.

Disclosed herein are narrow band Pancharatnam-Berry Phase (PBP) diffractive lenses, as well as AR combiners and MR displays that include such lenses. The diffractive lenses may be placed directly in front of the eye of a user without distorting world-side image light or producing diffraction artifacts. According to some embodiments, a narrowband PBP lens may be paired with a narrowband notched reflector having a matched spectral response. The notched reflector may be located on the world side of the stack of elements and configured to reflect the same wavelengths that the lens acts on.

The multilayer architecture of exemplary Pancharatnam-Berry Phase (PBP) diffractive lenses may include alternating layers of chiral and achiral liquid crystals arranged to produce a triple-notched, color-selective diffractive response while preserving high transmission outside the selected bands. Exemplary PBP lenses may exhibit a spectral bandwidth of less than 30 nm.

The achiral layers may be patterned so that their fast-axis orientation varies across the aperture according to a prescribed phase profile. When circularly polarized light traverses such a patterned birefringent layer with approximately half-wave equivalent retardance near target wavelengths, the local fast-axis orientation may impose a geometric phase shift proportional to twice the orientation angle. By continuously varying this orientation across the lens, a phase front corresponding to a desired optical power is synthesized, yielding diffractive focusing or defocusing depending on the handedness of the incident circular polarization.

The chiral liquid crystal layers may be inserted as thin sub-retardance elements with opposite handedness twists to tailor the spectral response. Their controlled twist angles and dispersion shape the wavelength dependence of the effective retardance seen by the achiral pattern, sharpening the pass-band and notch edges, suppressing sidelobe leakage, and defining three narrow efficiency peaks that coincide with selected red, green, and blue wavelengths. Because the chiral layers are thin and oppositely twisted, they do not substantially shift the geometric-phase center wavelengths set by the achiral layers. Rather, they adjust bandwidth, roll-off, and ripple. The overall stack acts analogously to a folded Solc birefringent filter integrated with a spatially varying geometric-phase element, such that at the three selected bands the combined retardance approaches the desired value for high polarization conversion and geometric-phase efficiency, while at out-of-band wavelengths the conversion is minimized and the lens remains nearly transparent.

During operation, incident light from a projector is prepared in a known polarization state and directed through the multilayer lens. At the RGB bands, the lens converts the polarization and imparts the programmed geometric phase, producing diffractive focusing with near-unity efficiency for one circular handedness and opposite-sign power for the other handedness. Unpolarized light from the world side splits into components that experience opposite geometric-phase signs. Paired system elements such as notched reflectors can be aligned to reject the specific wavelengths at which the lens is highly diffractive, preventing distortion of ambient scene light. In this way, the multilayer PBP lens provides color-selective optical power via geometric phase at three narrow spectral bands while transmitting the remainder of the visible spectrum with minimal interaction.

As used herein, "chiral" refers to a material or structure lacking mirror symmetry such that its molecular arrangement or macroscopic orientation exhibits handedness. In liquid crystals, chiral layers typically induce a helical twist in the director field, producing polarization-dependent optical effects (e.g., circular birefringence) whose sign depends on the handedness of the chirality.

As used herein, "achiral" refers to a material or structure possessing mirror symmetry such that it does not exhibit handedness. In liquid crystals, achiral layers typically present a non-helical nematic director field whose fast-axis orientation can be spatially patterned without imparting an intrinsic twist, thereby providing birefringent retardance without circular birefringence arising from chirality.

Example chiral liquid crystal materials include (S)- or (R)-2-methylbutyl 4-(4'-cyanobiphenyl)carboxylate, (S)- or (R)-octyl lactate, (S)- or (R)-2-octyloxypropionate esters of mesogenic acids, functionalized (S)- or (R)-1,1'-bi-2-naphthol derivatives, cholesteryl nonanoate, and cholesteryl oleyl carbonate.

Example achiral liquid crystal materials include 4'-pentyl-4-biphenylcarbonitrile and related cyanobiphenyls, phenylpyrimidine nematics such as 4-(trans-4-propylcyclohexyl)-2-fluorophenylpyrimidine, tolane-based nematics such as 4,4'-di(n-alkyl)tolanes with nitrile substitution, trans-4-(n-alkyl)cyclohexylbenzonitriles, fluorinated biphenylcarbonitriles such as 4'-alkyl-4-fluoro-biphenylcarbonitriles, and reactive mesogen diacrylate monomers such as 1,4-bis[4-(6-acryloyloxyhexyloxy)benzoyloxy]benzene.

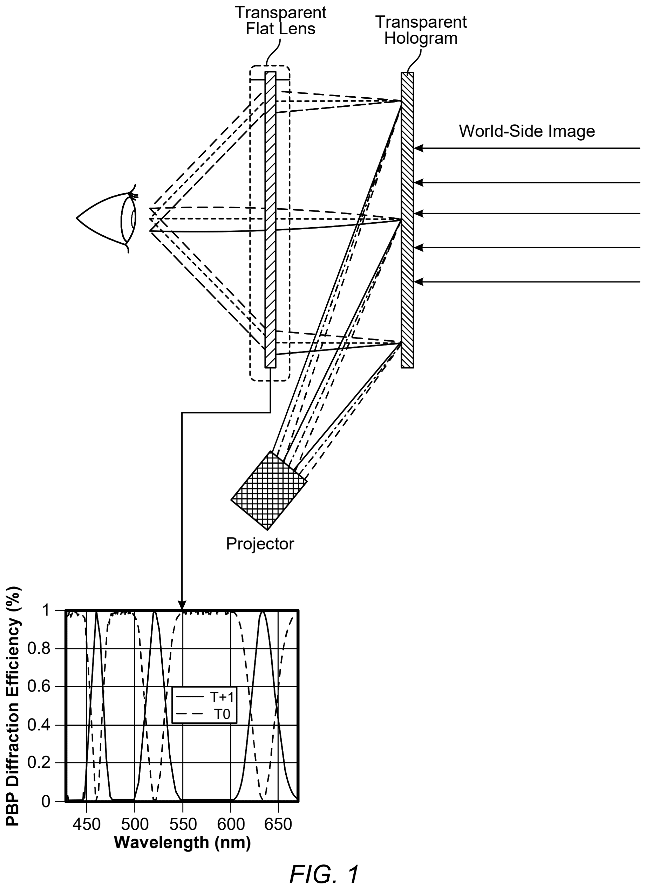

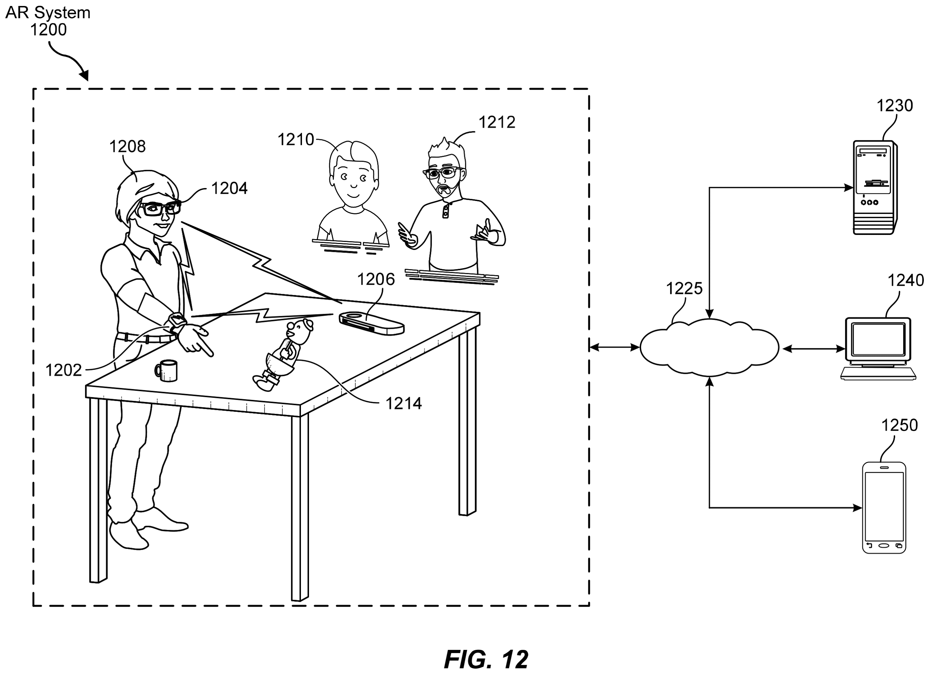

The following will provide, with reference to FIGS. 1-20, detailed descriptions of PBP diffractive lenses having a triple notched response. The discussion associated with FIGS. 1-11 includes a description of example structures and characteristics of Pancharatnam-Berry Phase diffractive lenses. The discussion associated with FIGS. 12-20 relates to exemplary display devices that may include a co-integrated triple notched PBP diffractive lens as disclosed herein.

With reference to FIG. 1, in many display applications, it is desirable to have an optical see-through combiner that is highly transparent to the real-world scene while being highly responsive to the display RGB spectra forming the virtual image. An optical combiner can include a steering optical element such as diffractive lenses, mirrors, or beam splitters. During operation, the steering optical elements may be efficient to projector wavelengths, maximally responding (e.g., by diffraction or reflection) to the different projector colors while being maximally transparent to the world-side scene.

In accordance with some embodiments, disclosed is a flat diffractive Pancharatnam-Berry Phase (PBP) lens having approximately 100% diffraction efficiency for narrowband RGB spectrum emitted from the AR/MR display panel while being near 100% transparent to the out-of-band spectra entering the AR/MR device from the world side, including daylight spectra and ambient light.

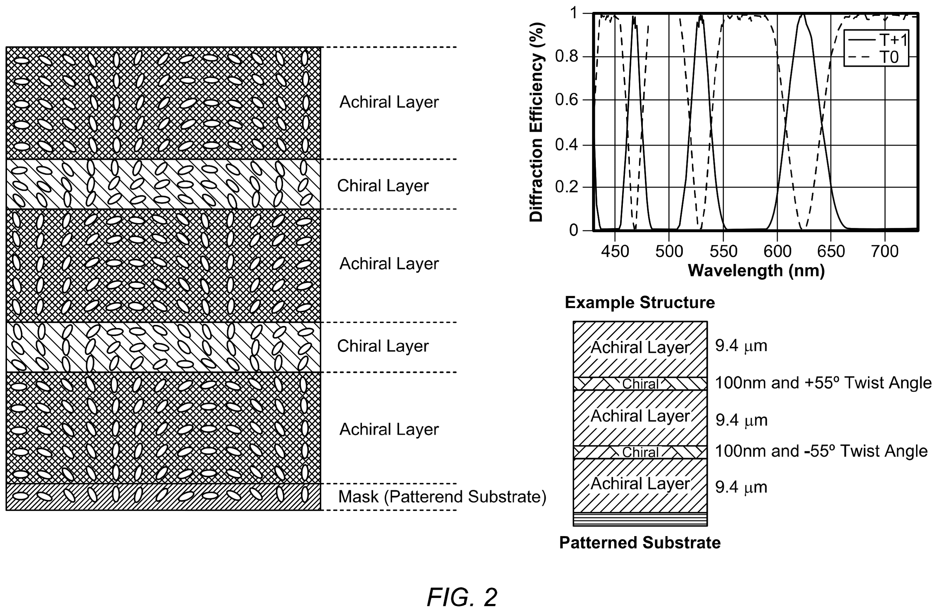

Turning to FIG. 2, shown is a cross-sectional diagram of a flat diffractive Pancharatnam-Berry Phase (PBP) lens having alternating chiral and achiral liquid crystal layers. The design is based on a folded Solc birefringent optical filter having three achiral layers of equivalent thickness and two thin (<100 nm) chiral layers with equal but opposite twist angles. Such a lens may be color selective and adapted to diffract narrow band RGB spectra with full width at half maximum (FWHM) values of 15 nm for blue light, 21 nm for green light, and 33 nm for red light. While this example is based on a folded Solc birefringent optical filter, other multi-notched PBP lenses may include a fan Solc filter or hybrid configurations.

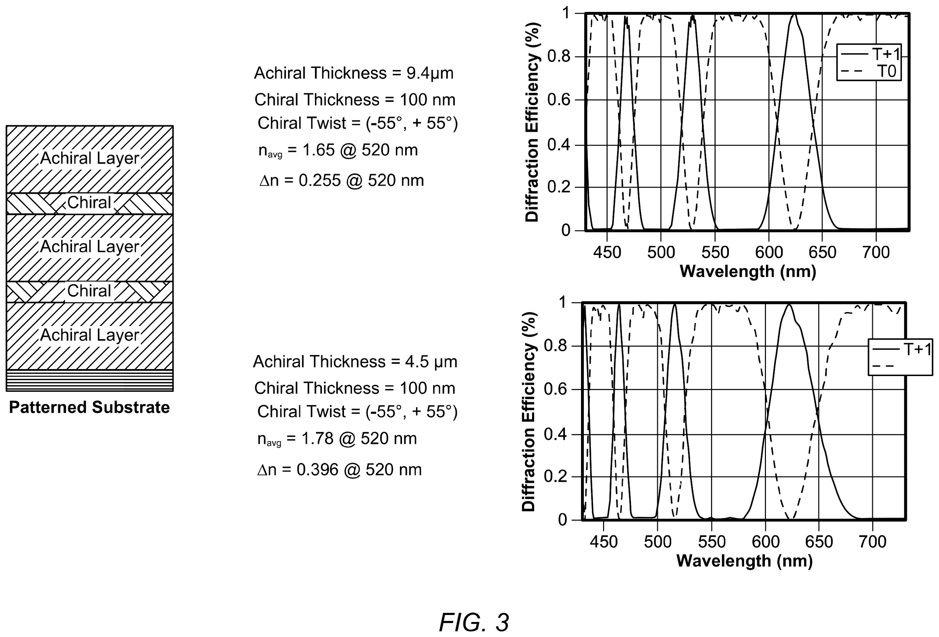

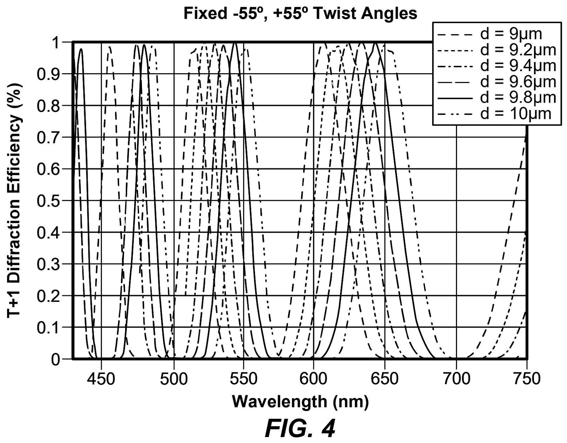

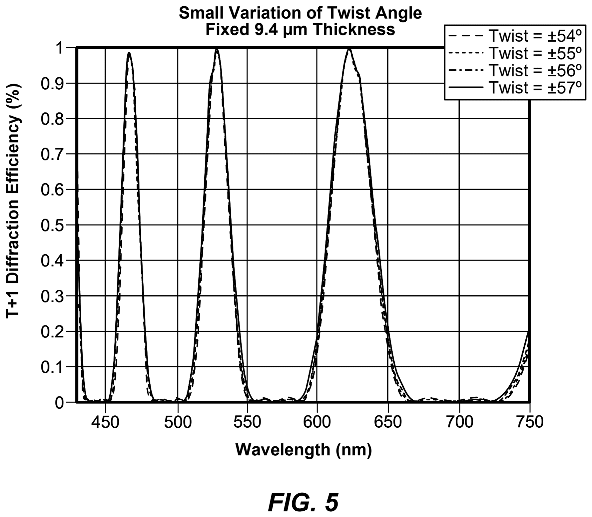

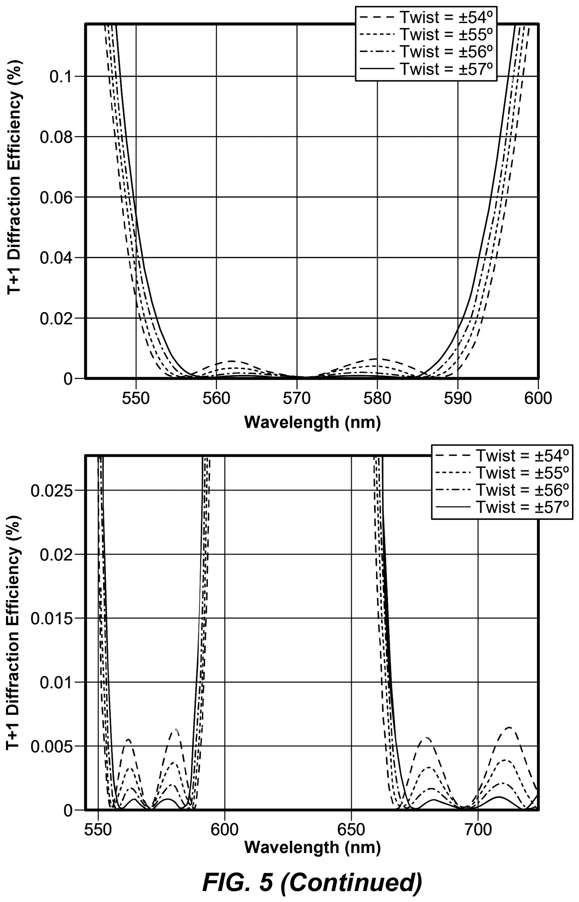

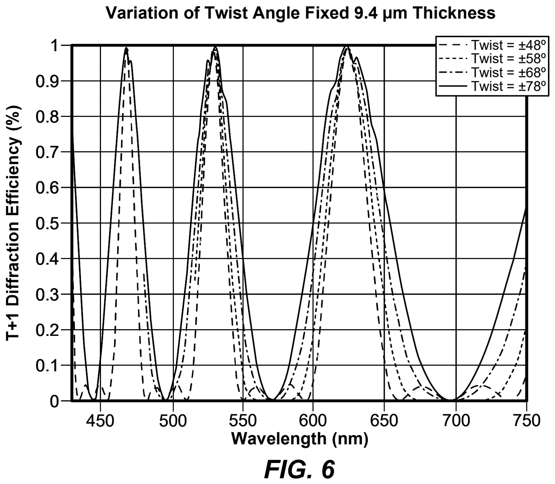

Structural details and associated performance characteristics of example triple notched Pancharatnam-Berry Phase (PBP) lens are shown in FIG. 3. A plot of diffraction efficiency versus wavelength for different achiral layer thicknesses is shown in FIG. 4. Referring to FIG. 5, depicted is a plot of diffraction efficiency versus wavelength for different LC twist angles, showing that twist angle can be tuned without having a substantial effect on the PBP center wavelengths. However, referring to FIG. 6, for a fixed LC layer thickness, the shape of the diffraction efficiency response can be controlled by tuning the twist angle.

Through LC material selection, including refractive index, birefringence, and layer thickness, the triple notched response of a diffractive Pancharatnam-Berry Phase (PBP) lens at any desirable wavelength(s) can be tuned to provide a targeted response with optimizable parameters that include (1) the center wavelength locations of the three peaks, (2) the spectral bandwidth or full-width half maximum (FWHM), (3) the free spectral range (FSR), i.e., a spectral distance between peaks, (4) the filter roll-off, and (5) out-of-band sidelobe ripples (leakages). More specifically, the thickness of the achiral layer may determine the desired location of the peak wavelengths. The twist angle of the chiral layer may affect side-lobe ripples, filter roll-off and FWHM. In some embodiments, the material dispersion profile may determine the FSR.

As used herein, a Pancharatnam-Berry Phase (PBP) lens refers to a diffractive optical element that leverages the geometric phase, also known as the Berry phase, to manipulate light. The geometric phase, which is related to the polarization state of light, is a phase difference acquired over the course of a cycle when the system is subjected to cyclic adiabatic processes.

In accordance with various embodiments, a PBP lens may be designed to have a triple notched response, where it is configured to diffract light at three distinct wavelengths (e.g., RGB) while remaining transparent to other wavelengths. Such a lens may be highly efficient for specific projector wavelengths, for example, while being transparent to the rest of the visible electromagnetic spectrum. As used herein, the "visible electromagnetic spectrum" refers to the portion of optical wavelengths perceptible to the average human eye, spanning approximately 380 nm to 750 nm. In some examples, bounds may be taken as about 400 nm to 700 nm, with shorter wavelengths perceived as violet/blue and longer wavelengths perceived as red.

A PBP lens may be composed of multiple layers of liquid crystals, which can be either chiral or achiral. The arrangement of these layers determines the lens's ability to diffract light efficiently at specific wavelengths.

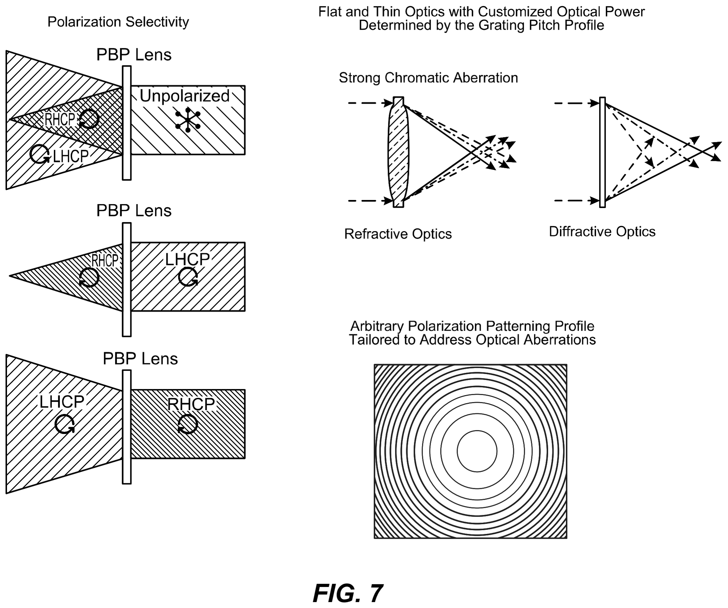

PBP lenses are polarization-sensitive, meaning they can selectively focus or defocus light based on its polarization state. As seen with reference to FIG. 7, a Pancharatnam-Berry Phase lens may perform a converging or diverging operation depending on the handedness of input circularly polarized light. With such dynamic light manipulation, input collimated left hand circularly polarized light is output as convergent right hand circularly polarized light, input collimated right hand circularly polarized light is output as divergent left hand circularly polarized light, and unpolarized collimated light is output as convergent right hand circularly polarized light and divergent left hand circularly polarized light.

Pancharatnam-Berry Phase lenses may be characterized as relatively thin and planar diffractive optics with customized optical power that is solely dependent on the geometric phase profile enabling optimized performance of the optical aberrations and high resolving power across the field of view.

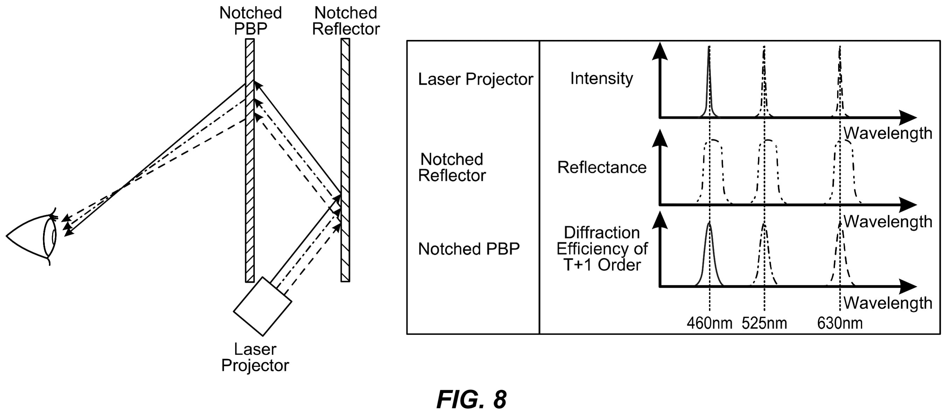

In some embodiments, a display system may include a notched reflector co-integrated with a notched Pancharatnam-Berry Phase lens. Referring to FIG. 8, a notched reflective mirror may be located on the world side of a notched PBP lens. The reflection bands of the mirror may be aligned with the diffraction bands of the lens, which prevents the PBP lens from diffracting world side image light (because the notched mirror reflects the same wavelengths that the PBP lens diffracts) while transmitting all other wavelengths. The display system may also include a light source configured to project virtual content to the PBP lens from the eye side of the notched reflector.

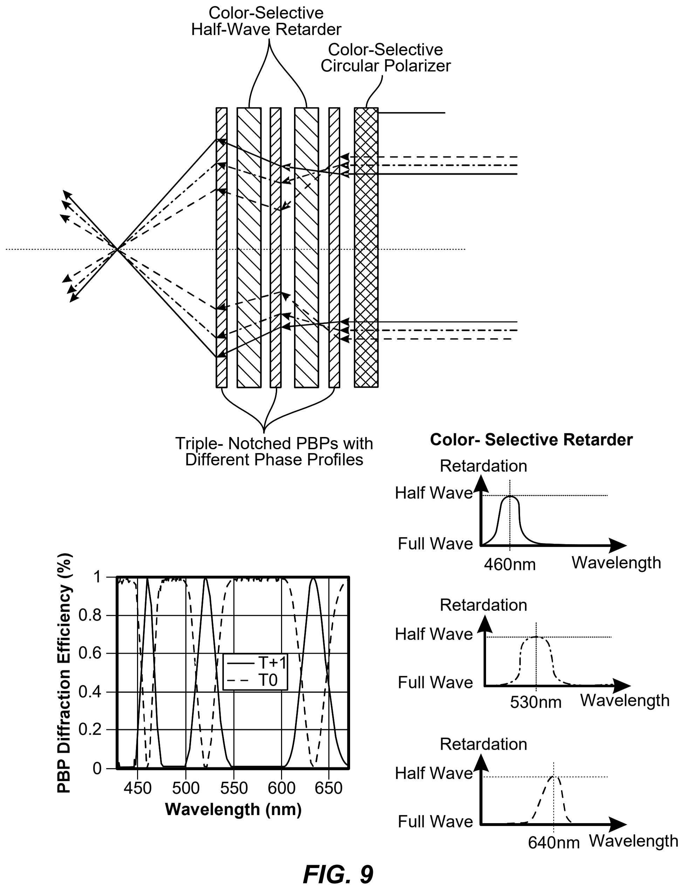

A further example display system is shown schematically in FIG. 9. A trio of triple notched Pancharatnam-Berry Phase lens each having a unique phase profile are arranged alternately with color-selective half wavelength retarders. The half wavelength retarders are configured to transmit visible wavelengths while selectively modifying the polarization of individual wavelengths. For instance, incident blue light may be changed to left hand circularly polarized light while red and green light are changed to right hand circularly polarized light. The half wavelength retarders are configured as switching elements that enable converging or diverging light depending on the input circular polarization state for each wavelength. By manipulating the optical path of RGB colors within the PBP/retarder stack, all rays at different wavelengths may be converged to an equivalent focal length.

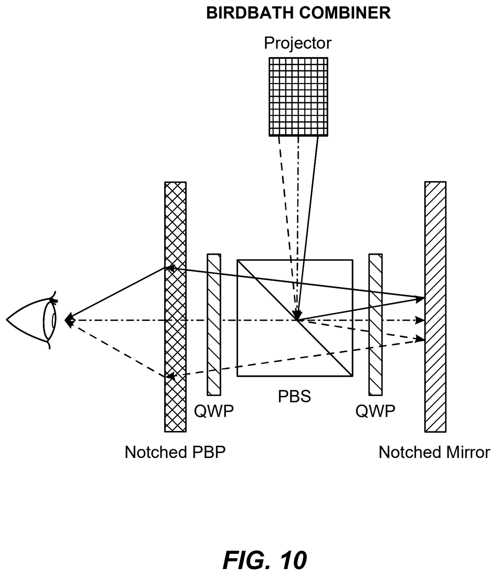

Referring to FIG. 10, shown schematically is the structure of an all flat birdbath combiner. The combiner is configured to merge real-world and virtual images. In contrast to comparative birdbath combiners that include a curved mirror to redirect and focus light from a projector to the eye, the illustrated system includes a polarization beam splitter with a flat multi-notched mirror located upstream of the beam splitter and one or more notched Pancharatnam-Berry Phase lenses downstream of the beam splitter opposite to the notched mirror. The disclosed all flat birdbath combiner may have decreased size and/or weight relative to comparative combiners.

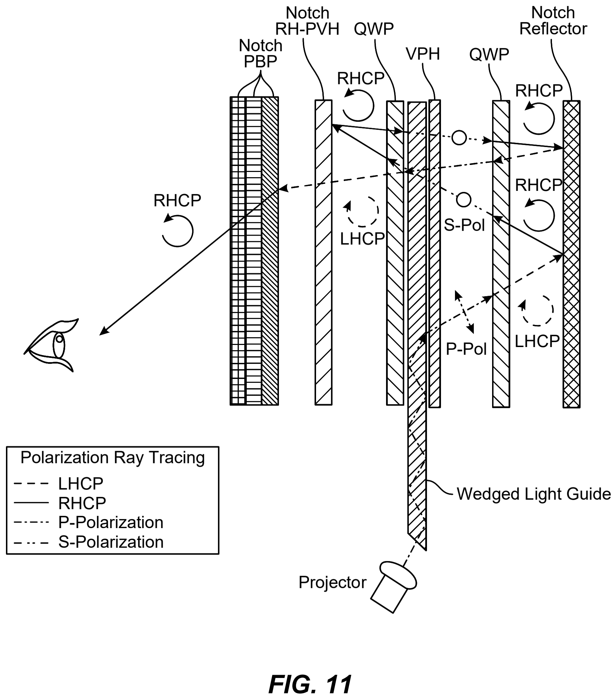

A further display system is shown in FIG. 11. The display of FIG. 11 may include a transparent pancake lens with all diffractive notched optics for see-through MR/AR. During operation, light from a display panel may be projected onto a wedge-shaped lightguide that is immersed within a pancake cavity formed by a notched mirror and a polarization dependent notched grating. Light having angles less than a critical angle for total internal reflection escapes the wedge and interacts with a volume phase hologram (VPH) that redirects the light to the notched reflector. Through a series of polarization conversions, the optical path of the light is folded 3 times before escaping the pancake cavity and interacting with notched PBP lenses. The notched PBP lenses focuses the light to the eye.

Because the optical elements, including the notched PBP lenses, notched PVH and notched reflector, are essentially transparent across the visible band (excluding 3 narrowband spectra), light from the world side is substantially transmitted to the eye, with only three spectral bands cut.

Disclosed are narrowband Pancharatnam-Berry Phase (PBP) diffractive lenses engineered with a triple-notched spectral response aligned to red, green, and blue display wavelengths for augmented, mixed, and virtual reality optical systems. A PBP lens may include a multilayer liquid crystal (LC) stack with alternating achiral layers and thin chiral layers of opposite twist, arranged in folded Solc filter-type architectures, to achieve high diffraction efficiency at three selected narrow bands while remaining substantially transparent across the rest of the visible spectrum. Achiral layer thickness can predominantly set the notched center wavelengths, while the chiral layer twist angle can shape bandwidth, roll-off, and sidelobe behavior. Example bandwidths include approximately 12 to 18 nm (blue), 20 to 25 nm (green), and 30 to 35 nm (red) full width at half maximum, with peak efficiency near unity at the selected bands.

A PBP lens may impart optical power through a geometric-phase profile with spatially varying fast-axis orientation and may exhibit polarization-dependent focusing or defocusing based on the handedness of circular polarization. Some embodiments co-integrate a notched reflector with reflection bands matched to the lens's diffraction bands to prevent world-side light at those wavelengths from being diffracted while transmitting other wavelengths, thereby enhancing see-through quality. Additional configurations may interleave color-selective half-wave retarders with multiple PBP lenses to equalize focal lengths across RGB and reduce chromatic aberration.

Device implementations may include all-flat birdbath combiners using a flat multi-notched mirror and downstream notched PBP lenses to reduce size and weight, as well as transparent pancake lens architectures that fold the optical path with notched mirrors and volume phase holograms before final focusing by notched PBP elements. The disclosure further contemplates high-transparency, high-efficiency AR/MR/VR displays that selectively manipulate projector light while minimally impacting ambient scene transmission, enabling compact optical systems suitable for various wearable platforms and user interaction modalities.

### Example Embodiments

Example 1: An optical system includes a Pancharatnam-Berry Phase (PBP) lens configured to diffract light at three distinct wavelengths corresponding to red, green, and blue bands, where the PBP lens includes a multilayer structure with alternating chiral and achiral liquid crystal layers, and the PBP lens has a transparency of at least 85% to wavelengths outside the red, green, and blue bands.

Example 2: The optical system of Example 1 where the PBP lens has a diffraction band full width at half maximum (FWHM) of 12 to 18 nm for the blue band, 20 to 25 nm for the green band, and 30 to 35 nm for the red band.

Example 3: The optical system of any of Examples 1 and 2, where the multilayer structure has a folded Solc architecture including three achiral liquid crystal layers of substantially equal thickness and two chiral liquid crystal layers disposed between the achiral layers, the chiral liquid crystal layers having opposite handedness with equal magnitude twist and each having a physical thickness of less than 100 nm.

Example 4: The optical system of any of Examples 1-3, where fast-axis orientations of the achiral liquid crystal layers are arranged in a sequence that is symmetric about a mid-plane of the multilayer structure such that orientation angles in an upper half of the multilayer structure are a mirror of orientation angles in a lower half of the multilayer structure.

Example 5: The optical system of any of Examples 1-4, where each achiral liquid crystal layer has a birefringence in a range of approximately 0.08 to 0.20 and a physical thickness in a range of approximately 0.8 µm to 3.0 µm, the birefringence and thickness being selected to set center wavelengths of respective red, green and blue diffraction bands.

Example 6: The optical system of any of Examples 1-5, where each chiral liquid crystal layer has a twist angle with respect to an adjacent achiral layer in a range of approximately ±20° to ±120° and an optical retardance of less than approximately one-quarter wave over the visible electromagnetic spectrum.

Example 7: The optical system of any of Examples 1-6, where the multilayer structure begins and ends with an achiral liquid crystal layer.

Example 8: The optical system of any of Examples 1-7, further including a notched reflector disposed on a world side of the PBP lens, the notched reflector having reflection bands spectrally aligned with the red, green, and blue diffraction bands of the PBP lens so that world-side light at notched wavelengths is reflected and out-of-band wavelengths are transmitted.

Example 9: An optical display system includes a stacked optical element having a first Pancharatnam-Berry Phase (PBP) lens, a second PBP lens, and a third PBP lens, each of the first, second, and third PBP lenses being a triple-notched diffractive lens configured to diffract light at three distinct wavelengths corresponding to red, green, and blue bands while being transparent to out-of-band wavelengths, the stacked optical element further including a first color-selective half-wave retarder disposed between the first PBP lens and the second PBP lens and a second color-selective half-wave retarder disposed between the second PBP lens and the third PBP lens.

Example 10: The optical display system of Example 9, where each of the first, second, and third PBP lenses includes a multilayer liquid crystal structure having alternating achiral liquid crystal layers and chiral liquid crystal layers of opposite handedness.

Example 11: The optical display system of any of Examples 9 and 10, where the achiral liquid crystal layers are configured to provide a spatially varying fast-axis orientation that imparts a geometric-phase profile, and the chiral liquid crystal layers are configured to provide sub-quarter-wave retardance with twist angles selected to shape spectral bandwidth and roll-off without substantially shifting notch centers.

Example 12: The optical display system of any of Examples 9-11, where each achiral liquid crystal layer has a birefringence in a range of approximately 0.08 to 0.20 and a physical thickness in a range of approximately 0.8 µm to 3.0 µm, and each chiral liquid crystal layer has a physical thickness of less than 100 nm.

Example 13: The optical display system of any of Examples 9-12, where the first and second color-selective half-wave retarders are configured to selectively modify circular polarization on a per-wavelength basis so that, for at least one of the red, green, and blue bands, light exits the first color-selective half-wave retarder with a handedness that causes the second PBP lens to provide a focusing operation and exits the second color-selective half-wave retarder with a handedness that causes the third PBP lens to provide a defocusing operation, and for at least one other of the red, green, and blue bands, light exits with an opposite handedness to invert a focusing sign of at least one of the second or third PBP lenses, such that combined optical power of the first, second, and third PBP lenses yields substantially equal effective focal lengths for the red, green, and blue bands at an exit pupil.

Example 14: The optical display system of any of Examples 9-13, where at least one of the PBP lenses has a diffraction band full width at half maximum (FWHM) of 12 to 18 nm for the blue band, 20 to 25 nm for the green band, and 30 to 35 nm for the red band.

Example 15: The optical display system of any of Examples 9-14, where the stacked optical element is arranged along a common optical axis in a sequence, from an eye side toward a display side, of (i) the first PBP lens, (ii) the first color-selective half-wave retarder, (iii) the second PBP lens, (iv) the second color-selective half-wave retarder, and (v) the third PBP lens, each of the PBP lenses and color-selective half-wave retarders being parallel to one another with coextensive clear apertures, and where spatial phase profiles of the first, second, and third PBP lenses are laterally registered about the common optical axis so that corresponding phase features are coincident across the stacked optical element.

Example 16: A Pancharatnam-Berry Phase lens includes a multilayer liquid crystal stack having alternating achiral liquid crystal layers and chiral liquid crystal layers of opposite handedness, the achiral liquid crystal layers being patterned with a spatially varying fast-axis orientation to impart a geometric-phase profile, the multilayer liquid crystal stack beginning and ending with an achiral liquid crystal layer.

Example 17: The Pancharatnam-Berry Phase lens of Example 16, where the multilayer liquid crystal stack is configured as a folded Solc architecture in which the fast-axis orientations of the achiral liquid crystal layers are arranged in a sequence that is symmetric about a mid-plane of the stack.

Example 18: The Pancharatnam-Berry Phase lens of any of Examples 16 and 17, where each chiral liquid crystal layer is a sub-retardance twist layer disposed between adjacent achiral liquid crystal layers and is selected to tailor spectral bandwidth and roll-off without substantially shifting geometric-phase center wavelengths set by the achiral liquid crystal layers.

Example 19: The Pancharatnam-Berry Phase lens of any of Examples 16-18, where each achiral liquid crystal layer has a birefringence in a range of approximately 0.08 to 0.20 and a physical thickness in a range of approximately 0.8 µm to 3.0 µm, and each chiral liquid crystal layer has a physical thickness of less than 100 nm.

Example 20: The Pancharatnam-Berry Phase lens of any of Examples 16-19, where the multilayer liquid crystal stack includes three achiral liquid crystal layers and two chiral liquid crystal layers.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, in some embodiments, AR may also be associated with applications, products, accessories, services, or some combination thereof, that are used to, for example, create content in an artificial reality and/or are otherwise used in (e.g., to perform activities in) an artificial reality.

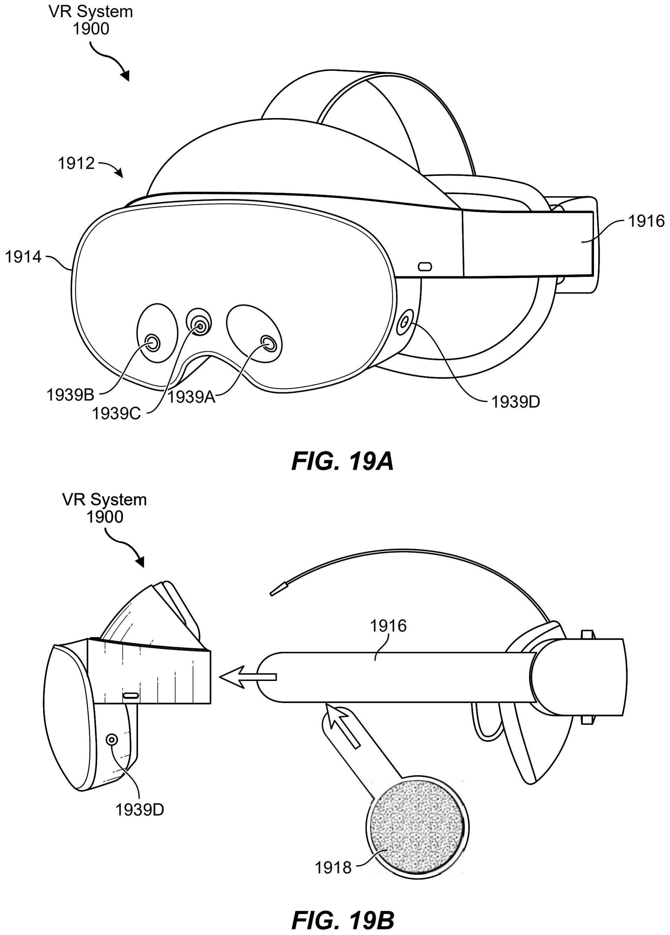

AR systems may be implemented in a variety of different form factors and configurations. Some AR systems may be designed to work without near-eye displays (NEDs). Other AR systems may include a NED that also provides visibility into the real world (such as, e.g., VR system 1900 in FIGS. 19A and 19B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

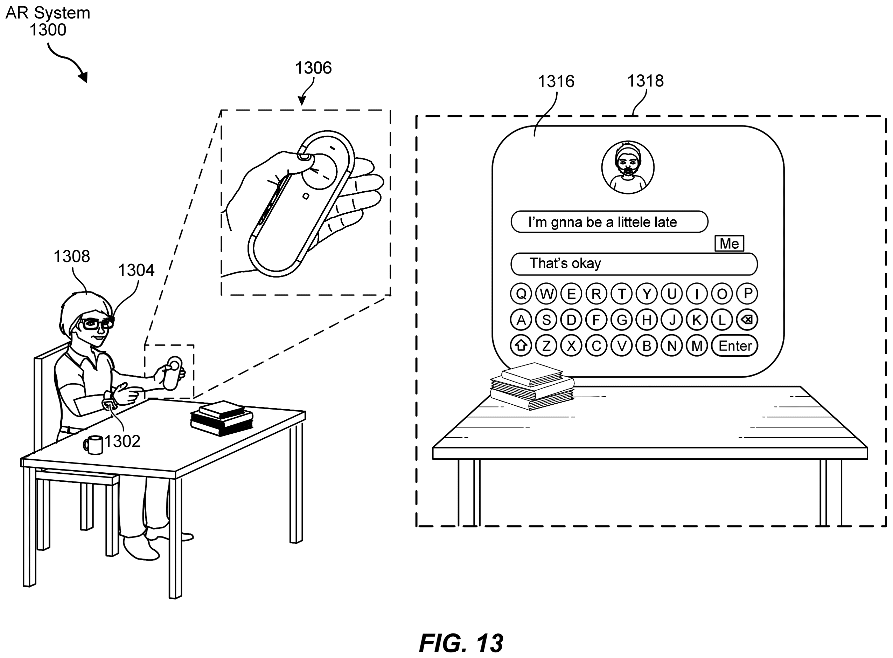

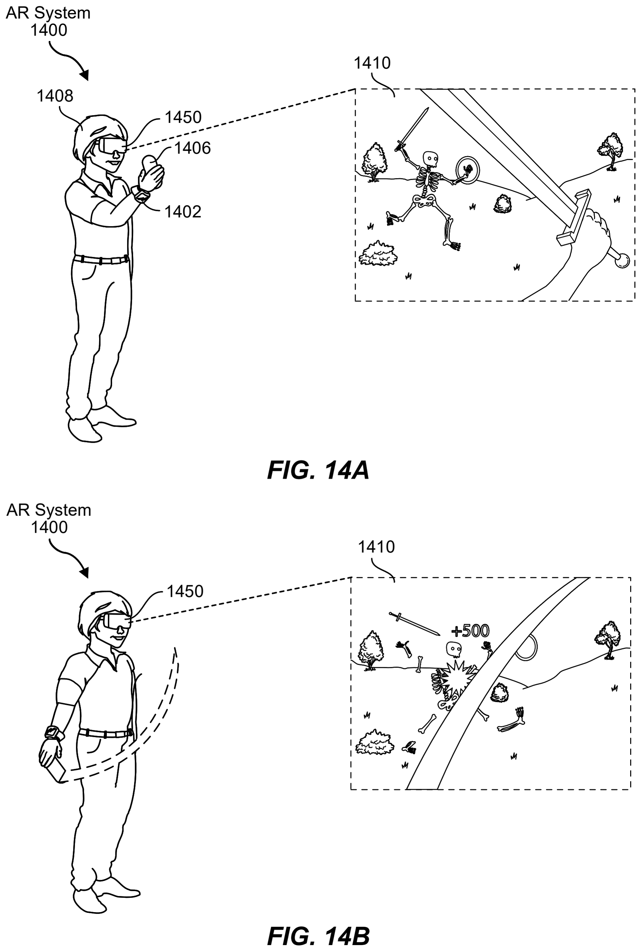

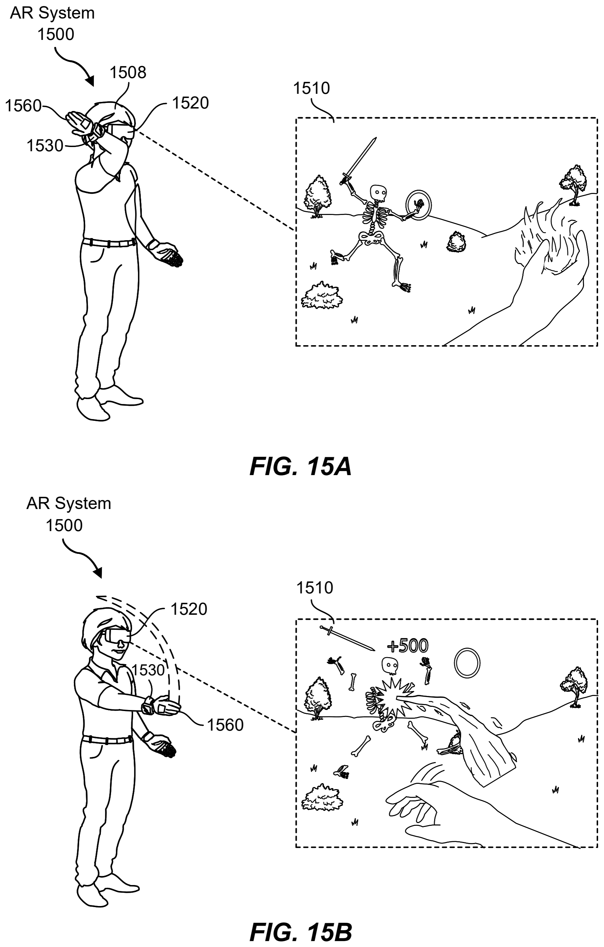

FIGS. 12-15B illustrate example artificial-reality (AR) systems in accordance with some embodiments. FIG. 12 shows a first AR system 1200 and first example user interactions using a wrist-wearable device 1202, a head-wearable device (e.g., AR system 1800), and/or a handheld intermediary processing device (HIPD) 1206. FIG. 13 shows a second AR system 1300 and second example user interactions using a wrist-wearable device 1302, AR glasses 1304, and/or an HIPD 1306. FIGS. 14A and 14B show a third AR system 1400 and third example user 1408 interactions using a wrist-wearable device 1402, a head-wearable device (e.g., VR headset 1450), and/or an HIPD 1406. FIGS. 15A and 15B show a fourth AR system 1500 and fourth example user 1508 interactions using a wrist-wearable device 1530, VR headset 1520, and/or a haptic device 1560 (e.g., wearable gloves).

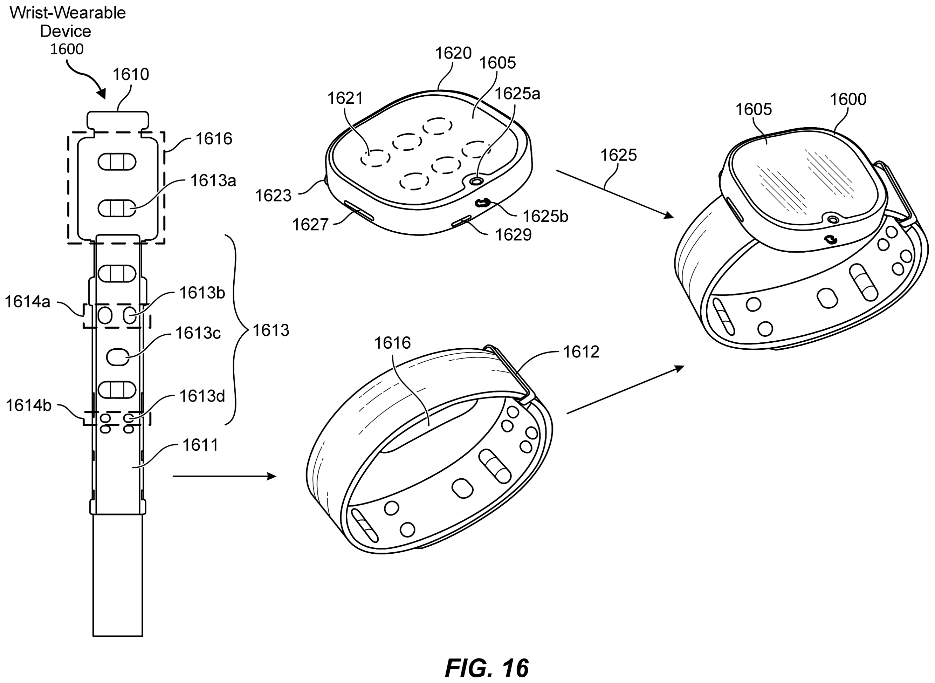

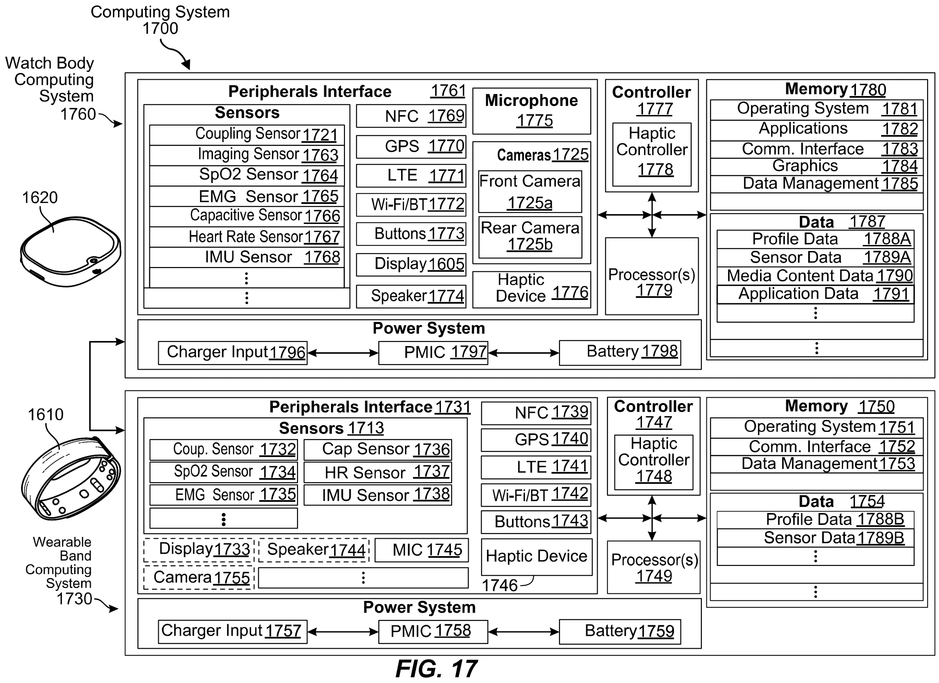

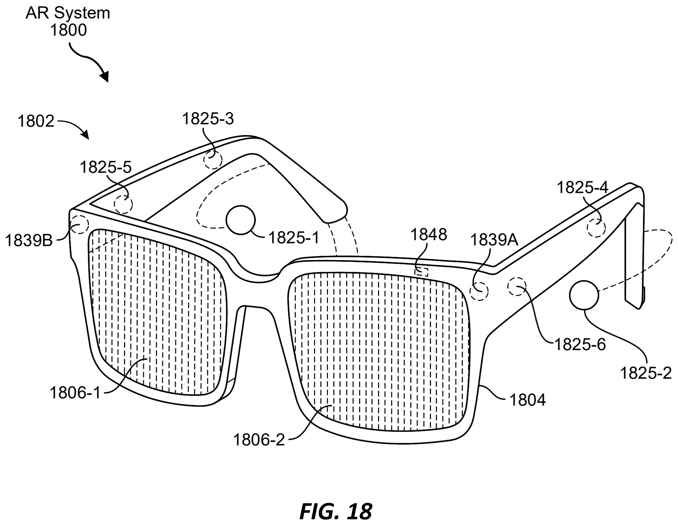

A wrist-wearable device 1600, which can be used for wrist-wearable device 1202, 1302, 1402, 1530, and one or more of its components, are described below in reference to FIGS. 16 and 17; AR system 1800 and VR system 1900, which can respectively be used for AR glasses 1204, 1304 or VR headset 1450, 1520, and their one or more components are described below in reference to FIGS. 18-20.

Referring to FIG. 12, wrist-wearable device 1202, AR glasses 1204, and/or HIPD 1206 can communicatively couple via a network 1225 (e.g., cellular, near field, Wi-Fi, personal area network, wireless LAN, etc.). Additionally, wrist-wearable device 1202, AR glasses 1204, and/or HIPD 1206 can also communicatively couple with one or more servers 1230, computers 1240 (e.g., laptops, computers, etc.), mobile devices 1250 (e.g., smartphones, tablets, etc.), and/or other electronic devices via network 1225 (e.g., cellular, near field, Wi-Fi, personal area network, wireless LAN, etc.).

In FIG. 12, a user 1208 is shown wearing wrist-wearable device 1202 and AR glasses 1204 and having HIPD 1206 on their desk. The wrist-wearable device 1202, AR glasses 1204, and HIPD 1206 facilitate user interaction with an AR environment. In particular, as shown by first AR system 1200, wrist-wearable device 1202, AR glasses 1204, and/or HIPD 1206 cause presentation of one or more avatars 1210, digital representations of contacts 1212, and virtual objects 1214. As discussed below, user 1208 can interact with one or more avatars 1210, digital representations of contacts 1212, and virtual objects 1214 via wrist-wearable device 1202, AR glasses 1204, and/or HIPD 1206.

User 1208 can use any of wrist-wearable device 1202, AR glasses 1204, and/or HIPD 1206 to provide user inputs. For example, user 1208 can perform one or more hand gestures that are detected by wrist-wearable device 1202 (e.g., using one or more EMG sensors and/or IMUs, described below in reference to FIGS. 16 and 17) and/or AR glasses 1204 (e.g., using one or more image sensor or camera, described below in reference to FIGS. 18-10) to provide a user input. Alternatively, or additionally, user 1208 can provide a user input via one or more touch surfaces of wrist-wearable device 1202, AR glasses 1204, HIPD 1206, and/or voice commands captured by a microphone of wrist-wearable device 1202, AR glasses 1204, and/or HIPD 1206. In some embodiments, wrist-wearable device 1202, AR glasses 1204, and/or HIPD 1206 include a digital assistant to help user 1208 in providing a user input (e.g., completing a sequence of operations, suggesting different operations or commands, providing reminders, confirming a command, etc.). In some embodiments, user 1208 can provide a user input via one or more facial gestures and/or facial expressions. For example, cameras of wrist-wearable device 1202, AR glasses 1204, and/or HIPD 1206 can track eyes of user 1208 for navigating a user interface.

Wrist-wearable device 1202, AR glasses 1204, and/or HIPD 1206 can operate alone or in conjunction to allow user 1208 to interact with the AR environment. In some embodiments, HIPD 1206 is configured to operate as a central hub or control center for the wrist-wearable device 1202, AR glasses 1204, and/or another communicatively coupled device. For example, user 1208 can provide an input to interact with the AR environment at any of wrist-wearable device 1202, AR glasses 1204, and/or HIPD 1206, and HIPD 1206 can identify one or more back-end and front-end tasks to cause the performance of the requested interaction and distribute instructions to cause the performance of the one or more back-end and front-end tasks at wrist-wearable device 1202, AR glasses 1204, and/or HIPD 1206. In some embodiments, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). As described below, HIPD 1206 can perform the back-end tasks and provide wrist-wearable device 1202 and/or AR glasses 1204 operational data corresponding to the performed back-end tasks such that wrist-wearable device 1202 and/or AR glasses 1204 can perform the front-end tasks. In this way, HIPD 1206, which has more computational resources and greater thermal headroom than wrist-wearable device 1202 and/or AR glasses 1204, performs computationally intensive tasks and reduces the computer resource utilization and/or power usage of wrist-wearable device 1202 and/or AR glasses 1204.

In the example shown by first AR system 1200, HIPD 1206 identifies one or more back-end tasks and front-end tasks associated with a user request to initiate an AR video call with one or more other users (represented by avatar 1210 and the digital representation of contact 1212) and distributes instructions to cause the performance of the one or more back-end tasks and front-end tasks. In particular, HIPD 1206 performs back-end tasks for processing and/or rendering image data (and other data) associated with the AR video call and provides operational data associated with the performed back-end tasks to AR glasses 1204 such that the AR glasses 1204 perform front-end tasks for presenting the AR video call (e.g., presenting avatar 1210 and digital representation of contact 1212).

In some embodiments, HIPD 1206 can operate as a focal or anchor point for causing the presentation of information. This allows user 1208 to be generally aware of where information is presented. For example, as shown in first AR system 1200, avatar 1210 and the digital representation of contact 1212 are presented above HIPD 1206. In particular, HIPD 1206 and AR glasses 1204 operate in conjunction to determine a location for presenting avatar 1210 and the digital representation of contact 1212. In some embodiments, information can be presented a predetermined distance from HIPD 1206 (e.g., within 5 meters). For example, as shown in first AR system 1200, virtual object 1214 is presented on the desk some distance from HIPD 1206. Similar to the above example, HIPD 1206 and AR glasses 1204 can operate in conjunction to determine a location for presenting virtual object 1214. Alternatively, in some embodiments, presentation of information is not bound by HIPD 1206. More specifically, avatar 1210, digital representation of contact 1212, and virtual object 1214 do not have to be presented within a predetermined distance of HIPD 1206.

User inputs provided at wrist-wearable device 1202, AR glasses 1204, and/or HIPD 1206 are coordinated such that the user can use any device to initiate, continue, and/or complete an operation. For example, user 1208 can provide a user input to AR glasses 1204 to cause AR glasses 1204 to present virtual object 1214 and, while virtual object 1214 is presented by AR glasses 1204, user 1208 can provide one or more hand gestures via wrist-wearable device 1202 to interact and/or manipulate virtual object 1214.

FIG. 13 shows a user 1308 wearing a wrist-wearable device 1302 and AR glasses 1304, and holding an HIPD 1306. In second AR system 1300, the wrist-wearable device 1302, AR glasses 1304, and/or HIPD 1306 are used to receive and/or provide one or more messages to a contact of user 1308. In particular, wrist-wearable device 1302, AR glasses 1304, and/or HIPD 1306 detect and coordinate one or more user inputs to initiate a messaging application and prepare a response to a received message via the messaging application.

In some embodiments, user 1308 initiates, via a user input, an application on wrist-wearable device 1302, AR glasses 1304, and/or HIPD 1306 that causes the application to initiate on at least one device. For example, in second AR system 1300, user 1308 performs a hand gesture associated with a command for initiating a messaging application (represented by messaging user interface 1316), wrist-wearable device 1302 detects the hand gesture and, based on a determination that user 1308 is wearing AR glasses 1304, causes AR glasses 1304 to present a messaging user interface 1316 of the messaging application. AR glasses 1304 can present messaging user interface 1316 to user 1308 via its display (e.g., as shown by a field of view 1318 of user 1308). In some embodiments, the application is initiated and executed on the device (e.g., wrist-wearable device 1302, AR glasses 1304, and/or HIPD 1306) that detects the user input to initiate the application, and the device provides another device operational data to cause the presentation of the messaging application. For example, wrist-wearable device 1302 can detect the user input to initiate a messaging application, initiate and run the messaging application, and provide operational data to AR glasses 1304 and/or HIPD 1306 to cause presentation of the messaging application. Alternatively, the application can be initiated and executed at a device other than the device that detected the user input. For example, wrist-wearable device 1302 can detect the hand gesture associated with initiating the messaging application and cause HIPD 1306 to run the messaging application and coordinate the presentation of the messaging application.

Further, user 1308 can provide a user input provided at wrist-wearable device 1302, AR glasses 1304, and/or HIPD 1306 to continue and/or complete an operation initiated at another device. For example, after initiating the messaging application via wrist-wearable device 1302 and while AR glasses 1304 present messaging user interface 1316, user 1308 can provide an input at HIPD 1306 to prepare a response (e.g., shown by the swipe gesture performed on HIPD 1306). Gestures performed by user 1308 on HIPD 1306 can be provided and/or displayed on another device. For example, a swipe gestured performed on HIPD 1306 is displayed on a virtual keyboard of messaging user interface 1316 displayed by AR glasses 1304.

In some embodiments, wrist-wearable device 1302, AR glasses 1304, HIPD 1306, and/or any other communicatively coupled device can present one or more notifications to user 1308. The notification can be an indication of a new message, an incoming call, an application update, a status update, etc. User 1308 can select the notification via wrist-wearable device 1302, AR glasses 1304, and/or HIPD 1306 and can cause presentation of an application or operation associated with the notification on at least one device. For example, user 1308 can receive a notification that a message was received at wrist-wearable device 1302, AR glasses 1304, HIPD 1306, and/or any other communicatively coupled device and can then provide a user input at wrist-wearable device 1302, AR glasses 1304, and/or HIPD 1306 to review the notification, and the device detecting the user input can cause an application associated with the notification to be initiated and/or presented at wrist-wearable device 1302, AR glasses 1304, and/or HIPD 1306.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 1304 can present to user 1308 game application data, and HIPD 1306 can be used as a controller to provide inputs to the game. Similarly, user 1308 can use wrist-wearable device 1302 to initiate a camera of AR glasses 1304, and user 308 can use wrist-wearable device 1302, AR glasses 1304, and/or HIPD 1306 to manipulate the image capture (e.g., zoom in or out, apply filters, etc.) and capture image data.

Users may interact with the devices disclosed herein in a variety of ways. For example, as shown in FIGS. 14A and 14B, a user 1408 may interact with an AR system 1400 by donning a VR headset 1450 while holding HIPD 1406 and wearing wrist-wearable device 1402. In this example, AR system 1400 may enable a user to interact with a game 1410 by swiping their arm. One or more of VR headset 1450, HIPD 1406, and wrist-wearable device 1402 may detect this gesture and, in response, may display a sword strike in game 1410. Similarly, in FIGS. 15A and 15B, a user 1508 may interact with an AR system 1500 by donning a VR headset 1520 while wearing haptic device 1560 and wrist-wearable device 1530. In this example, AR system 1500 may enable a user to interact with a game 1510 by swiping their arm. One or more of VR headset 1520, haptic device 1560, and wrist-wearable device 1530 may detect this gesture and, in response, may display a spell being cast in game 1410.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some embodiments discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some embodiments, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by embodiments described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various embodiments described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configured to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 1802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some embodiments, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 16 and 17 illustrate an example wrist-wearable device 1600 and an example computer system 1700, in accordance with some embodiments. Wrist-wearable device 1600 is an instance of wearable device 1202 described in FIG. 12 herein, such that the wearable device 1202 should be understood to have the features of the wrist-wearable device 1600 and vice versa. FIG. 17 illustrates components of the wrist-wearable device 1600, which can be used individually or in combination, including combinations that include other electronic devices and/or electronic components.

FIG. 16 shows a wearable band 1610 and a watch body 1620 (or capsule) being coupled, as discussed below, to form wrist-wearable device 1600. Wrist-wearable device 1600 can perform various functions and/or operations associated with navigating through user interfaces and selectively opening applications as well as the functions and/or operations described above with reference to FIGS. 12-15B.

As will be described in more detail below, operations executed by wrist-wearable device 1600 can include (i) presenting content to a user (e.g., displaying visual content via a display 1605), (ii) detecting (e.g., sensing) user input (e.g., sensing a touch on peripheral button 1623 and/or at a touch screen of the display 1605, a hand gesture detected by sensors (e.g., biopotential sensors)), (iii) sensing biometric data (e.g., neuromuscular signals, heart rate, temperature, sleep, etc.) via one or more sensors 1613, messaging (e.g., text, speech, video, etc.); image capture via one or more imaging devices or cameras 1625, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 1620, independently in wearable band 1610, and/or via an electronic communication between watch body 1620 and wearable band 1610. In some embodiments, functions can be executed on wrist-wearable device 1600 while an AR environment is being presented (e.g., via one of AR systems 1200 to 1500). The wearable devices described herein can also be used with other types of AR environments.

Wearable band 1610 can be configured to be worn by a user such that an inner surface of a wearable structure 1611 of wearable band 1610 is in contact with the user's skin. In this example, when worn by a user, sensors 1613 may contact the user's skin. In some examples, one or more of sensors 1613 can sense biometric data such as a user's heart rate, a saturated oxygen level, temperature, sweat level, neuromuscular signals, or a combination thereof. One or more of sensors 1613 can also sense data about a user's environment including a user's motion, altitude, location, orientation, gait, acceleration, position, or a combination thereof. In some embodiment, one or more of sensors 1613 can be configured to track a position and/or motion of wearable band 1610. One or more of sensors 1613 can include any of the sensors defined above and/or discussed below with respect to FIG. 16.

One or more of sensors 1613 can be distributed on an inside and/or an outside surface of wearable band 1610. In some embodiments, one or more of sensors 1613 are uniformly spaced along wearable band 1610. Alternatively, in some embodiments, one or more of sensors 1613 are positioned at distinct points along wearable band 1610. As shown in FIG. 16, one or more of sensors 1613 can be the same or distinct. For example, in some embodiments, one or more of sensors 1613 can be shaped as a pill (e.g., sensor 1613a), an oval, a circle a square, an oblong (e.g., sensor 1613c) and/or any other shape that maintains contact with the user's skin (e.g., such that neuromuscular signal and/or other biometric data can be accurately measured at the user's skin). In some embodiments, one or more sensors of 1613 are aligned to form pairs of sensors (e.g., for sensing neuromuscular signals based on differential sensing within each respective sensor). For example, sensor 1613b may be aligned with an adjacent sensor to form sensor pair 1614a and sensor 1613d may be aligned with an adjacent sensor to form sensor pair 1614b. In some embodiments, wearable band 1610 does not have a sensor pair. Alternatively, in some embodiments, wearable band 1610 has a predetermined number of sensor pairs (one pair of sensors, three pairs of sensors, four pairs of sensors, six pairs of sensors, sixteen pairs of sensors, etc.).

Wearable band 1610 can include any suitable number of sensors 1613. In some embodiments, the number and arrangement of sensors 1613 depends on the particular application for which wearable band 1610 is used. For instance, wearable band 1610 can be configured as an armband, wristband, or chest-band that include a plurality of sensors 1613 with different number of sensors 1613, a variety of types of individual sensors with the plurality of sensors 1613, and different arrangements for each use case, such as medical use cases as compared to gaming or general day-to-day use cases.

In accordance with some embodiments, wearable band 1610 further includes an electrical ground electrode and a shielding electrode. The electrical ground and shielding electrodes, like the sensors 1613, can be distributed on the inside surface of the wearable band 1610 such that they contact a portion of the user's skin. For example, the electrical ground and shielding electrodes can be at an inside surface of a coupling mechanism 1616 or an inside surface of a wearable structure 1611. The electrical ground and shielding electrodes can be formed and/or use the same components as sensors 1613. In some embodiments, wearable band 1610 includes more than one electrical ground electrode and more than one shielding electrode.

Sensors 1613 can be formed as part of wearable structure 1611 of wearable band 1610. In some embodiments, sensors 1613 are flush or substantially flush with wearable structure 1611 such that they do not extend beyond the surface of wearable structure 1611. While flush with wearable structure 1611, sensors 1613 are still configured to contact the user's skin (e.g., via a skin-contacting surface). Alternatively, in some embodiments, sensors 1613 extend beyond wearable structure 1611 a predetermined distance (e.g., 0.1 - 2 mm) to make contact and depress into the user's skin. In some embodiment, sensors 1613 are coupled to an actuator (not shown) configured to adjust an extension height (e.g., a distance from the surface of wearable structure 1611) of sensors 1613 such that sensors 1613 make contact and depress into the user's skin. In some embodiments, the actuators adjust the extension height between 0.01 mm - 1.2 mm. This may allow a user to customize the positioning of sensors 1613 to improve the overall comfort of the wearable band 1610 when worn while still allowing sensors 1613 to contact the user's skin. In some embodiments, sensors 1613 are indistinguishable from wearable structure 1611 when worn by the user.

Wearable structure 1611 can be formed of an elastic material, elastomers, etc., configured to be stretched and fitted to be worn by the user. In some embodiments, wearable structure 1611 is a textile or woven fabric. As described above, sensors 1613 can be formed as part of a wearable structure 1611. For example, sensors 1613 can be molded into the wearable structure 1611, be integrated into a woven fabric (e.g., sensors 1613 can be sewn into the fabric and mimic the pliability of fabric and can and/or be constructed from a series woven strands of fabric).

Wearable structure 1611 can include flexible electronic connectors that interconnect sensors 1613, the electronic circuitry, and/or other electronic components (described below in reference to FIG. 17) that are enclosed in wearable band 1610. In some embodiments, the flexible electronic connectors are configured to interconnect sensors 1613, the electronic circuitry, and/or other electronic components of wearable band 1610 with respective sensors and/or other electronic components of another electronic device (e.g., watch body 1620). The flexible electronic connectors are configured to move with wearable structure 1611 such that the user adjustment to wearable structure 1611 (e.g., resizing, pulling, folding, etc.) does not stress or strain the electrical coupling of components of wearable band 1610.

As described above, wearable band 1610 is configured to be worn by a user. In particular, wearable band 1610 can be shaped or otherwise manipulated to be worn by a user. For example, wearable band 1610 can be shaped to have a substantially circular shape such that it can be configured to be worn on the user's lower arm or wrist. Alternatively, wearable band 1610 can be shaped to be worn on another body part of the user, such as the user's upper arm (e.g., around a bicep), forearm, chest, legs, etc. Wearable band 1610 can include a retaining mechanism 1612 (e.g., a buckle, a hook and loop fastener, etc.) for securing wearable band 1610 to the user's wrist or other body part. While wearable band 1610 is worn by the user, sensors 1613 sense data (referred to as sensor data) from the user's skin. In some examples, sensors 1613 of wearable band 1610 obtain (e.g., sense and record) neuromuscular signals.

The sensed data (e.g., sensed neuromuscular signals) can be used to detect and/or determine the user's intention to perform certain motor actions. In some examples, sensors 1613 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 1605 of wrist-wearable device 1600 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 1613 can be used to provide a user with an enhanced interaction with a physical object (e.g., devices communicatively coupled with wearable band 1610) and/or a virtual object in an artificial-reality application generated by an artificial-reality system (e.g., user interface objects presented on the display 1605, or another computing device (e.g., a smartphone)).

In some embodiments, wearable band 1610 includes one or more haptic devices 1746 (e.g., a vibratory haptic actuator) that are configured to provide haptic feedback (e.g., a cutaneous and/or kinesthetic sensation, etc.) to the user's skin. Sensors 1613 and/or haptic devices 1746 (shown in FIG. 17) can be configured to operate in conjunction with multiple applications including, without limitation, health monitoring, social media, games, and artificial reality (e.g., the applications associated with artificial reality).

Wearable band 1610 can also include coupling mechanism 1616 for detachably coupling a capsule (e.g., a computing unit) or watch body 1620 (via a coupling surface of the watch body 1620) to wearable band 1610. For example, a cradle or a shape of coupling mechanism 1616 can correspond to shape of watch body 1620 of wrist-wearable device 1600. In particular, coupling mechanism 1616 can be configured to receive a coupling surface proximate to the bottom side of watch body 1620 (e.g., a side opposite to a front side of watch body 1620 where display 1605 is located), such that a user can push watch body 1620 downward into coupling mechanism 1616 to attach watch body 1620 to coupling mechanism 1616. In some embodiments, coupling mechanism 1616 can be configured to receive a top side of the watch body 1620 (e.g., a side proximate to the front side of watch body 1620 where display 1605 is located) that is pushed upward into the cradle, as opposed to being pushed downward into coupling mechanism 1616. In some embodiments, coupling mechanism 1616 is an integrated component of wearable band 1610 such that wearable band 1610 and coupling mechanism 1616 are a single unitary structure. In some embodiments, coupling mechanism 1616 is a type of frame or shell that allows watch body 1620 coupling surface to be retained within or on wearable band 1610 coupling mechanism 1616 (e.g., a cradle, a tracker band, a support base, a clasp, etc.).

Coupling mechanism 1616 can allow for watch body 1620 to be detachably coupled to the wearable band 1610 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 1620 to wearable band 1610 and to decouple the watch body 1620 from the wearable band 1610. For example, a user can twist, slide, turn, push, pull, or rotate watch body 1620 relative to wearable band 1610, or a combination thereof, to attach watch body 1620 to wearable band 1610 and to detach watch body 1620 from wearable band 1610. Alternatively, as discussed below, in some embodiments, the watch body 1620 can be decoupled from the wearable band 1610 by actuation of a release mechanism 1629.

Wearable band 1610 can be coupled with watch body 1620 to increase the functionality of wearable band 1610 (e.g., converting wearable band 1610 into wrist-wearable device 1600, adding an additional computing unit and/or battery to increase computational resources and/or a battery life of wearable band 1610, adding additional sensors to improve sensed data, etc.). As described above, wearable band 1610 and coupling mechanism 1616 are configured to operate independently (e.g., execute functions independently) from watch body 1620. For example, coupling mechanism 1616 can include one or more sensors 1613 that contact a user's skin when wearable band 1610 is worn by the user, with or without watch body 1620 and can provide sensor data for determining control commands.

A user can detach watch body 1620 from wearable band 1610 to reduce the encumbrance of wrist-wearable device 1600 to the user. For embodiments in which watch body 1620 is removable, watch body 1620 can be referred to as a removable structure, such that in these embodiments wrist-wearable device 1600 includes a wearable portion (e.g., wearable band 1610) and a removable structure (e.g., watch body 1620).

Turning to watch body 1620, in some examples watch body 1620 can have a substantially rectangular or circular shape. Watch body 1620 is configured to be worn by the user on their wrist or on another body part. More specifically, watch body 1620 is sized to be easily carried by the user, attached on a portion of the user's clothing, and/or coupled to wearable band 1610 (forming the wrist-wearable device 1600). As described above, watch body 1620 can have a shape corresponding to coupling mechanism 1616 of wearable band 1610. In some embodiments, watch body 1620 includes a single release mechanism 1629 or multiple release mechanisms (e.g., two release mechanisms 1629 positioned on opposing sides of watch body 1620, such as spring-loaded buttons) for decoupling watch body 1620 from wearable band 1610. Release mechanism 1629 can include, without limitation, a button, a knob, a plunger, a handle, a lever, a fastener, a clasp, a dial, a latch, or a combination thereof.

A user can actuate release mechanism 1629 by pushing, turning, lifting, depressing, shifting, or performing other actions on release mechanism 1629. Actuation of release mechanism 1629 can release (e.g., decouple) watch body 1620 from coupling mechanism 1616 of wearable band 1610, allowing the user to use watch body 1620 independently from wearable band 1610 and vice versa. For example, decoupling watch body 1620 from wearable band 1610 can allow a user to capture images using rear-facing camera 1625b. Although release mechanism 1629 is shown positioned at a corner of watch body 1620, release mechanism 1629 can be positioned anywhere on watch body 1620 that is convenient for the user to actuate. In addition, in some embodiments, wearable band 1610 can also include a respective release mechanism for decoupling watch body 1620 from coupling mechanism 1616. In some embodiments, release mechanism 1629 is optional and watch body 1620 can be decoupled from coupling mechanism 1616 as described above (e.g., via twisting, rotating, etc.).

Watch body 1620 can include one or more peripheral buttons 1623 and 1627 for performing various operations at watch body 1620. For example, peripheral buttons 1623 and 1627 can be used to turn on or wake (e.g., transition from a sleep state to an active state) display 1605, unlock watch body 1620, increase or decrease a volume, increase or decrease a brightness, interact with one or more applications, interact with one or more user interfaces, etc. Additionally, or alternatively, in some embodiments, display 1605 operates as a touch screen and allows the user to provide one or more inputs for interacting with watch body 1620.

In some embodiments, watch body 1620 includes one or more sensors 1621. Sensors 1621 of watch body 1620 can be the same or distinct from sensors 1613 of wearable band 1610. Sensors 1621 of watch body 1620 can be distributed on an inside and/or an outside surface of watch body 1620. In some embodiments, sensors 1621 are configured to contact a user's skin when watch body 1620 is worn by the user. For example, sensors 1621 can be placed on the bottom side of watch body 1620 and coupling mechanism 1616 can be a cradle with an opening that allows the bottom side of watch body 1620 to directly contact the user's skin. Alternatively, in some embodiments, watch body 1620 does not include sensors that are configured to contact the user's skin (e.g., including sensors internal and/or external to the watch body 1620 that are configured to sense data of watch body 1620 and the surrounding environment). In some embodiments, sensors 1621 are configured to track a position and/or motion of watch body 1620.

Watch body 1620 and wearable band 1610 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 1620 and wearable band 1610 can share data sensed by sensors 1613 and 1621, as well as application and device specific information (e.g., active and/or available applications, output devices (e.g., displays, speakers, etc.), input devices (e.g., touch screens, microphones, imaging sensors, etc.).

In some embodiments, watch body 1620 can include, without limitation, a front-facing camera 1625a and/or a rear-facing camera 1625b, sensors 1621 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1763), a touch sensor, a sweat sensor, etc.). In some embodiments, watch body 1620 can include one or more haptic devices 1776 (e.g., a vibratory haptic actuator) that is configured to provide haptic feedback (e.g., a cutaneous and/or kinesthetic sensation, etc.) to the user. Sensors 1721 and/or haptic device 1776 can also be configured to operate in conjunction with multiple applications including, without limitation, health monitoring applications, social media applications, game applications, and artificial reality applications (e.g., the applications associated with artificial reality).

As described above, watch body 1620 and wearable band 1610, when coupled, can form wrist-wearable device 1600. When coupled, watch body 1620 and wearable band 1610 may operate as a single device to execute functions (operations, detections, communications, etc.) described herein. In some embodiments, each device may be provided with particular instructions for performing the one or more operations of wrist-wearable device 1600. For example, in accordance with a determination that watch body 1620 does not include neuromuscular signal sensors, wearable band 1610 can include alternative instructions for performing associated instructions (e.g., providing sensed neuromuscular signal data to watch body 1620 via a different electronic device). Operations of wrist-wearable device 1600 can be performed by watch body 1620 alone or in conjunction with wearable band 1610 (e.g., via respective processors and/or hardware components) and vice versa. In some embodiments, operations of wrist-wearable device 1600, watch body 1620, and/or wearable band 1610 can be performed in conjunction with one or more processors and/or hardware components.

As described below with reference to the block diagram of FIG. 17, wearable band 1610 and/or watch body 1620 can each include independent resources required to independently execute functions. For example, wearable band 1610 and/or watch body 1620 can each include a power source (e.g., a battery), a memory, data storage, a processor (e.g., a central processing unit (CPU)), communications, a light source, and/or input/output devices.

FIG. 17 shows block diagrams of a computing system 1730 corresponding to wearable band 1610 and a computing system 1760 corresponding to watch body 1620 according to some embodiments. Computing system 1700 of wrist-wearable device 1600 may include a combination of components of wearable band computing system 1730 and watch body computing system 1760, in accordance with some embodiments.

Watch body 1620 and/or wearable band 1610 can include one or more components shown in watch body computing system 1760. In some embodiments, a single integrated circuit may include all or a substantial portion of the components of watch body computing system 1760 included in a single integrated circuit. Alternatively, in some embodiments, components of the watch body computing system 1760 may be included in a plurality of integrated circuits that are communicatively coupled. In some embodiments, watch body computing system 1760 may be configured to couple (e.g., via a wired or wireless connection) with wearable band computing system 1730, which may allow the computing systems to share components, distribute tasks, and/or perform other operations described herein (individually or as a single device).

Watch body computing system 1760 can include one or more processors 1779, a controller 1777, a peripherals interface 1761, a power system 1795, and memory (e.g., a memory 1780).

Power system 1795 can include a charger input 1796, a power-management integrated circuit (PMIC) 1797, and a battery 1798. In some embodiments, a watch body 1620 and a wearable band 1610 can have respective batteries (e.g., battery 1798 and 1759) and can share power with each other. Watch body 1620 and wearable band 1610 can receive a charge using a variety of techniques. In some embodiments, watch body 1620 and wearable band 1610 can use a wired charging assembly (e.g., power cords) to receive the charge. Alternatively, or in addition, watch body 1620 and/or wearable band 1610 can be configured for wireless charging. For example, a portable charging device can be designed to mate with a portion of watch body 1620 and/or wearable band 1610 and wirelessly deliver usable power to battery 1798 of watch body 1620 and/or battery 1759 of wearable band 1610. Watch body 1620 and wearable band 1610 can have independent power systems (e.g., power system 1795 and 1756, respectively) to enable each to operate independently. Watch body 1620 and wearable band 1610 can also share power (e.g., one can charge the other) via respective PMICs (e.g., PMICs 1797 and 1758) and charger inputs (e.g., 1757 and 1796) that can share power over power and ground conductors and/or over wireless charging antennas.

In some embodiments, peripherals interface 1761 can include one or more sensors 1721. Sensors 1721 can include one or more coupling sensors 1762 for detecting when watch body 1620 is coupled with another electronic device (e.g., a wearable band 1610). Sensors 1721 can include one or more imaging sensors 1763 (e.g., one or more of cameras 1725, and/or separate imaging sensors 1763 (e.g., thermal-imaging sensors)). In some embodiments, sensors 1721 can include one or more SpO2 sensors 1764. In some embodiments, sensors 1721 can include one or more biopotential-signal sensors (e.g., EMG sensors 1765, which may be disposed on an interior, user-facing portion of watch body 1620 and/or wearable band 1610). In some embodiments, sensors 1721 may include one or more capacitive sensors 1766. In some embodiments, sensors 1721 may include one or more heart rate sensors 1767. In some embodiments, sensors 1721 may include one or more IMU sensors 1768. In some embodiments, one or more IMU sensors 1768 can be configured to detect movement of a user's hand or other location where watch body 1620 is placed or held.

In some embodiments, one or more of sensors 1721 may provide an example human-machine interface. For example, a set of neuromuscular sensors, such as EMG sensors 1765, may be arranged circumferentially around wearable band 1610 with an interior surface of EMG sensors 1765 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 1610 can be used to generate control information for controlling an augmented reality system, a robot, controlling a vehicle, scrolling through text, controlling a virtual avatar, or any other suitable control task.

In some embodiments, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other embodiments, at least some signal processing of the output of the sensing components can be performed in software such as processors 1779. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 1765 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the embodiments described herein can also be implemented in wearable interfaces with other types of sensors including, but not limited to, mechanomyography (MMG) sensors, sonomyography (SMG) sensors, and electrical impedance tomography (EIT) sensors.

In some embodiments, peripherals interface 1761 includes a near-field communication (NFC) component 1769, a global-position system (GPS) component 1770, a long-term evolution (LTE) component 1771, and/or a Wi-Fi and/or Bluetooth communication component 1772. In some embodiments, peripherals interface 1761 includes one or more buttons 1773 (e.g., peripheral buttons 1623 and 1627 in FIG. 16), which, when selected by a user, cause operation to be performed at watch body 1620. In some embodiments, the peripherals interface 1761 includes one or more indicators, such as a light emitting diode (LED), to provide a user with visual indicators (e.g., message received, low battery, active microphone and/or camera, etc.).

Watch body 1620 can include at least one display 1605 for displaying visual representations of information or data to a user, including user-interface elements and/or three-dimensional virtual objects. The display can also include a touch screen for inputting user inputs, such as touch gestures, swipe gestures, and the like. Watch body 1620 can include at least one speaker 1774 and at least one microphone 1775 for providing audio signals to the user and receiving audio input from the user. The user can provide user inputs through microphone 1775 and can also receive audio output from speaker 1774 as part of a haptic event provided by haptic controller 1778. Watch body 1620 can include at least one camera 1725, including a front camera 1725a and a rear camera 1725b. Cameras 1725 can include ultra-wide-angle cameras, wide angle cameras, fish-eye cameras, spherical cameras, telephoto cameras, depth-sensing cameras, or other types of cameras.

Watch body computing system 1760 can include one or more haptic controllers 1778 and associated componentry (e.g., haptic devices 1776) for providing haptic events at watch body 1620 (e.g., a vibrating sensation or audio output in response to an event at the watch body 1620). Haptic controllers 1778 can communicate with one or more haptic devices 1776, such as electroacoustic devices, including a speaker of the one or more speakers 1774 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 1778 can provide haptic events to that are capable of being sensed by a user of watch body 1620. In some embodiments, one or more haptic controllers 1778 can receive input signals from an application of applications 1782.

In some embodiments, wearable band computing system 1730 and/or watch body computing system 1760 can include memory 1780, which can be controlled by one or more memory controllers of controllers 1777. In some embodiments, software components stored in memory 1780 include one or more applications 1782 configured to perform operations at the watch body 1620. In some embodiments, one or more applications 1782 may include games, word processors, messaging applications, calling applications, web browsers, social media applications, media streaming applications, financial applications, calendars, clocks, etc. In some embodiments, software components stored in memory 1780 include one or more communication interface modules 1783 as defined above. In some embodiments, software components stored in memory 1780 include one or more graphics modules 1784 for rendering, encoding, and/or decoding audio and/or visual data and one or more data management modules 1785 for collecting, organizing, and/or providing access to data 1787 stored in memory 1780. In some embodiments, one or more of applications 1782 and/or one or more modules can work in conjunction with one another to perform various tasks at the watch body 1620.

In some embodiments, software components stored in memory 1780 can include one or more operating systems 1781 (e.g., a Linux-based operating system, an Android operating system, etc.). Memory 1780 can also include data 1787. Data 1787 can include profile data 1788A, sensor data 1789A, media content data 1790, and application data 1791.

It should be appreciated that watch body computing system 1760 is an example of a computing system within watch body 1620, and that watch body 1620 can have more or fewer components than shown in watch body computing system 1760, can combine two or more components, and/or can have a different configuration and/or arrangement of the components. The various components shown in watch body computing system 1760 are implemented in hardware, software, firmware, or a combination thereof, including one or more signal processing and/or application-specific integrated circuits.

Turning to the wearable band computing system 1730, one or more components that can be included in wearable band 1610 are shown. Wearable band computing system 1730 can include more or fewer components than shown in watch body computing system 1760, can combine two or more components, and/or can have a different configuration and/or arrangement of some or all of the components. In some embodiments, all, or a substantial portion of the components of wearable band computing system 1730 are included in a single integrated circuit. Alternatively, in some embodiments, components of wearable band computing system 1730 are included in a plurality of integrated circuits that are communicatively coupled. As described above, in some embodiments, wearable band computing system 1730 is configured to couple (e.g., via a wired or wireless connection) with watch body computing system 1760, which allows the computing systems to share components, distribute tasks, and/or perform other operations described herein (individually or as a single device).

Wearable band computing system 1730, similar to watch body computing system 1760, can include one or more processors 1749, one or more controllers 1747 (including one or more haptics controllers 1748), a peripherals interface 1731 that can includes one or more sensors 1713 and other peripheral devices, a power source (e.g., a power system 1756), and memory (e.g., a memory 1750) that includes an operating system (e.g., an operating system 1751), data (e.g., data 1754 including profile data 1788B, sensor data 1789B, etc.), and one or more modules (e.g., a communications interface module 1752, a data management module 1753, etc.).

One or more of sensors 1713 can be analogous to sensors 1721 of watch body computing system 1760. For example, sensors 1713 can include one or more coupling sensors 1732, one or more Sp02 sensors 1734, one or more EMG sensors 1735, one or more capacitive sensors 1736, one or more heart rate sensors 1737, and one or more IMU sensors 1738.

Peripherals interface 1731 can also include other components analogous to those included in peripherals interface 1761 of watch body computing system 1760, including an NFC component 1739, a GPS component 1740, an LTE component 1741, a Wi-Fi and/or Bluetooth communication component 1742, and/or one or more haptic devices 1746 as described above in reference to peripherals interface 1761. In some embodiments, peripherals interface 1731 includes one or more buttons 1743, a display 1733, a speaker 1744, a microphone 1745, and a camera 1755. In some embodiments, peripherals interface 1731 includes one or more indicators, such as an LED.

It should be appreciated that wearable band computing system 1730 is an example of a computing system within wearable band 1610, and that wearable band 1610 can have more or fewer components than shown in wearable band computing system 1730, combine two or more components, and/or have a different configuration and/or arrangement of the components. The various components shown in wearable band computing system 1730 can be implemented in one or more of a combination of hardware, software, or firmware, including one or more signal processing and/or application-specific integrated circuits.

Wrist-wearable device 1600 with respect to FIG. 16 is an example of wearable band 1610 and watch body 1620 coupled together, so wrist-wearable device 1600 will be understood to include the components shown and described for wearable band computing system 1730 and watch body computing system 1760. In some embodiments, wrist-wearable device 1600 has a split architecture (e.g., a split mechanical architecture, a split electrical architecture, etc.) between watch body 1620 and wearable band 1610. In other words, all of the components shown in wearable band computing system 1730 and watch body computing system 1760 can be housed or otherwise disposed in a combined wrist-wearable device 1600 or within individual components of watch body 1620, wearable band 1610, and/or portions thereof (e.g., a coupling mechanism 1616 of wearable band 1610).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some embodiments, wrist-wearable device 1600 can be used in conjunction with a head-wearable device (e.g., AR system 1800 and VR system 1900) and/or an HIPD, and wrist-wearable device 1600 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR system 1800 and VR system 1900.

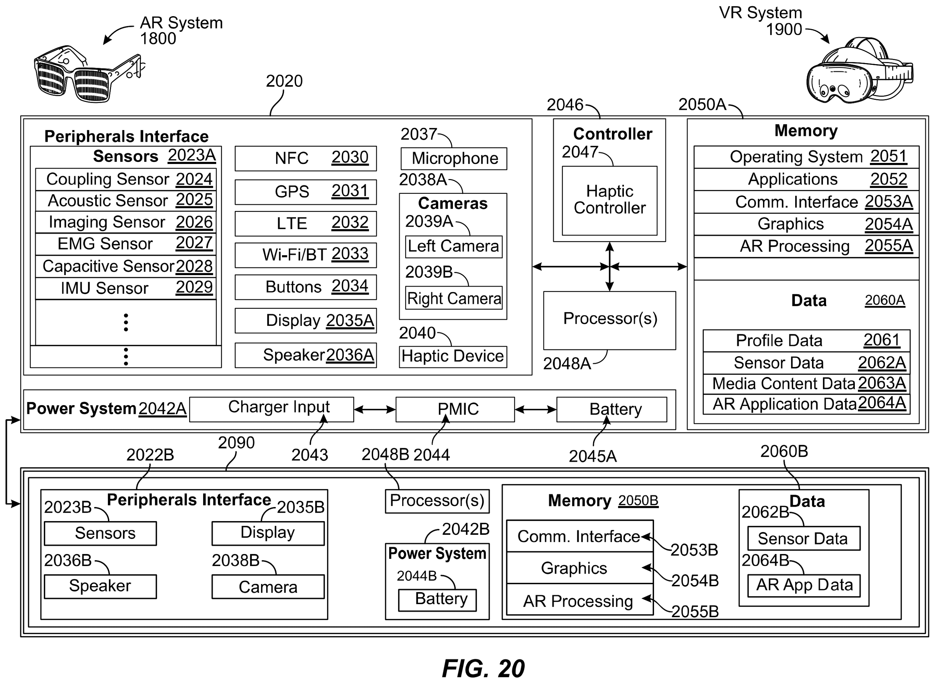

FIGS. 18 to 20 show example artificial-reality systems, which can be used as or in connection with wrist-wearable device 1600. In some embodiments, AR system 1800 includes an eyewear device 1802, as shown in FIG. 18. In some embodiments, VR system 1900 includes a head-mounted display (HMD) 1912, as shown in FIGS. 19A and 19B. In some embodiments, AR system 1800 and VR system 1900 can include one or more analogous components (e.g., components for presenting interactive artificial-reality environments, such as processors, memory, and/or presentation devices, including one or more displays and/or one or more waveguides), some of which are described in more detail with respect to FIG. 20. As described herein, a head-wearable device can include components of eyewear device 1802 and/or head-mounted display 1912. Some embodiments of head-wearable devices do not include any displays, including any of the displays described with respect to AR system 1800 and/or VR system 1900. While the example artificial-reality systems are respectively described herein as AR system 1800 and VR system 1900, either or both of the example AR systems described herein can be configured to present fully-immersive virtual-reality scenes presented in substantially all of a user's field of view or subtler augmented-reality scenes that are presented within a portion, less than all, of the user's field of view.

FIG. 18 show an example visual depiction of AR system 1800, including an eyewear device 1802 (which may also be described herein as augmented-reality glasses, and/or smart glasses). AR system 1800 can include additional electronic components that are not shown in FIG. 18, such as a wearable accessory device and/or an intermediary processing device, in electronic communication or otherwise configured to be used in conjunction with the eyewear device 1802. In some embodiments, the wearable accessory device and/or the intermediary processing device may be configured to couple with eyewear device 1802 via a coupling mechanism in electronic communication with a coupling sensor 2024 (FIG. 20), where coupling sensor 2024 can detect when an electronic device becomes physically or electronically coupled with eyewear device 1802. In some embodiments, eyewear device 1802 can be configured to couple to a housing 2090 (FIG. 20), which may include one or more additional coupling mechanisms configured to couple with additional accessory devices. The components shown in FIG. 18 can be implemented in hardware, software, firmware, or a combination thereof, including one or more signal-processing components and/or application-specific integrated circuits (ASICs).

Eyewear device 1802 includes mechanical glasses components, including a frame 1804 configured to hold one or more lenses (e.g., one or both lenses 1806-1 and 1806-2). One of ordinary skill in the art will appreciate that eyewear device 1802 can include additional mechanical components, such as hinges configured to allow portions of frame 1804 of eyewear device 1802 to be folded and unfolded, a bridge configured to span the gap between lenses 1806-1 and 1806-2 and rest on the user's nose, nose pads configured to rest on the bridge of the nose and provide support for eyewear device 1802, earpieces configured to rest on the user's ears and provide additional support for eyewear device 1802, temple arms configured to extend from the hinges to the earpieces of eyewear device 1802, and the like. One of ordinary skill in the art will further appreciate that some examples of AR system 1800 can include none of the mechanical components described herein. For example, smart contact lenses configured to present artificial reality to users may not include any components of eyewear device 1802.

Eyewear device 1802 includes electronic components, many of which will be described in more detail below with respect to FIG. 10. Some example electronic components are illustrated in FIG. 18, including acoustic sensors 1825-1, 1825-2, 1825-3, 1825-4, 1825-5, and 1825-6, which can be distributed along a substantial portion of the frame 1804 of eyewear device 1802. Eyewear device 1802 also includes a left camera 1839A and a right camera 1839B, which are located on different sides of the frame 1804. Eyewear device 1802 also includes a processor 1848 (or any other suitable type or form of integrated circuit) that is embedded into a portion of the frame 1804.

FIGS. 19A and 19B show a VR system 1900 that includes a head-mounted display (HMD) 1912 (e.g., also referred to herein as an artificial-reality headset, a head-wearable device, a VR headset, etc.), in accordance with some embodiments. As noted, some artificial-reality systems (e.g., AR system 1800) may, instead of blending an artificial reality with actual reality, substantially replace one or more of a user's visual and/or other sensory perceptions of the real world with a virtual experience (e.g., AR systems 1400 and 1500).

HMD 1912 includes a front body 1914 and a frame 1916 (e.g., a strap or band) shaped to fit around a user's head. In some embodiments, front body 1914 and/or frame 1916 include one or more electronic elements for facilitating presentation of and/or interactions with an AR and/or VR system (e.g., displays, IMUs, tracking emitter or detectors). In some embodiments, HMD 1912 includes output audio transducers (e.g., an audio transducer 1918), as shown in FIG. 19B. In some embodiments, one or more components, such as the output audio transducer(s) 1918 and frame 1916, can be configured to attach and detach (e.g., are detachably attachable) to HMD 1912 (e.g., a portion or all of frame 1916, and/or audio transducer 1918), as shown in FIG. 19B. In some embodiments, coupling a detachable component to HMD 1912 causes the detachable component to come into electronic communication with HMD 1912.

FIGS. 19A and 19B also show that VR system 1900 includes one or more cameras, such as left camera 1939A and right camera 1939B, which can be analogous to left and right cameras 1839A and 1839B on frame 1804 of eyewear device 1802. In some embodiments, VR system 1900 includes one or more additional cameras (e.g., cameras 1939C and 1939D), which can be configured to augment image data obtained by left and right cameras 1939A and 1939B by providing more information. For example, camera 1939C can be used to supply color information that is not discerned by cameras 1939A and 1939B. In some embodiments, one or more of cameras 1939A to 1939D can include an optional IR cut filter configured to remove IR light from being received at the respective camera sensors.

FIG. 20 illustrates a computing system 2020 and an optional housing 2090, each of which show components that can be included in AR system 1800 and/or VR system 1900. In some embodiments, more or fewer components can be included in optional housing 2090 depending on practical restraints of the respective AR system being described.

In some embodiments, computing system 2020 can include one or more peripherals interfaces 2022A and/or optional housing 2090 can include one or more peripherals interfaces 2022B. Each of computing system 2020 and optional housing 2090 can also include one or more power systems 2042A and 2042B, one or more controllers 2046 (including one or more haptic controllers 2047), one or more processors 2048A and 2048B (as defined above, including any of the examples provided), and memory 2050A and 2050B, which can all be in electronic communication with each other. For example, the one or more processors 2048A and 2048B can be configured to execute instructions stored in memory 2050A and 2050B, which can cause a controller of one or more of controllers 2046 to cause operations to be performed at one or more peripheral devices connected to peripherals interface 2022A and/or 2022B. In some embodiments, each operation described can be powered by electrical power provided by power system 2042A and/or 2042B.

In some embodiments, peripherals interface 2022A can include one or more devices configured to be part of computing system 2020, some of which have been defined above and/or described with respect to the wrist-wearable devices shown in FIGS. 16 and 17. For example, peripherals interface 2022A can include one or more sensors 2023A. Some example sensors 2023A include one or more coupling sensors 2024, one or more acoustic sensors 2025, one or more imaging sensors 2026, one or more EMG sensors 2027, one or more capacitive sensors 2028, one or more IMU sensors 2029, and/or any other types of sensors explained above or described with respect to any other embodiments discussed herein.

In some embodiments, peripherals interfaces 2022A and 2022B can include one or more additional peripheral devices, including one or more NFC devices 2030, one or more GPS devices 2031, one or more LTE devices 2032, one or more Wi-Fi and/or Bluetooth devices 2033, one or more buttons 2034 (e.g., including buttons that are slidable or otherwise adjustable), one or more displays 2035A and 2035B, one or more speakers 2036A and 2036B, one or more microphones 2037, one or more cameras 2038A and 2038B (e.g., including the left camera 2039A and/or a right camera 2039B), one or more haptic devices 2040, and/or any other types of peripheral devices defined above or described with respect to any other embodiments discussed herein.

AR systems can include a variety of types of visual feedback mechanisms (e.g., presentation devices). For example, display devices in AR system 1800 and/or VR system 1900 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some embodiments of AR systems also include optical subsystems having one or more lenses (e.g., conventional concave or convex lenses, Fresnel lenses, or adjustable liquid lenses) through which a user can view a display screen.

For example, respective displays 2035A and 2035B can be coupled to each of the lenses 1806-1 and 1806-2 of AR system 1800. Displays 2035A and 2035B may be coupled to each of lenses 1806-1 and 1806-2, which can act together or independently to present an image or series of images to a user. In some embodiments, AR system 1800 includes a single display 2035A or 2035B (e.g., a near-eye display) or more than two displays 2035A and 2035B. In some embodiments, a first set of one or more displays 2035A and 2035B can be used to present an augmented-reality environment, and a second set of one or more display devices 2035A and 2035B can be used to present a virtual-reality environment. In some embodiments, one or more waveguides are used in conjunction with presenting artificial-reality content to the user of AR system 1800 (e.g., as a means of delivering light from one or more displays 2035A and 2035B to the user's eyes). In some embodiments, one or more waveguides are fully or partially integrated into the eyewear device 1802. Additionally, or alternatively to display screens, some artificial-reality systems include one or more projection systems. For example, display devices in AR system 1800 and/or VR system 1900 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some embodiments, one or more waveguides are provided additionally or alternatively to the one or more display(s) 2035A and 2035B.

Computing system 2020 and/or optional housing 2090 of AR system 1800 or VR system 1900 can include some or all of the components of a power system 2042A and 2042B. Power systems 2042A and 2042B can include one or more charger inputs 2043, one or more PMICs 2044, and/or one or more batteries 2045A and 2044B.

Memory 2050A and 2050B may include instructions and data, some or all of which may be stored as non-transitory computer-readable storage media within the memories 2050A and 2050B. For example, memory 2050A and 2050B can include one or more operating systems 2051, one or more applications 2052, one or more communication interface applications 2053A and 2053B, one or more graphics applications 2054A and 2054B, one or more AR processing applications 2055A and 2055B, and/or any other types of data defined above or described with respect to any other embodiments discussed herein.

Memory 2050A and 2050B also include data 2060A and 2060B, which can be used in conjunction with one or more of the applications discussed above. Data 2060A and 2060B can include profile data 2061, sensor data 2062A and 2062B, media content data 2063A, AR application data 2064A and 2064B, and/or any other types of data defined above or described with respect to any other embodiments discussed herein.

In some embodiments, controller 2046 of eyewear device 1802 may process information generated by sensors 2023A and/or 2023B on eyewear device 1802 and/or another electronic device within AR system 1800. For example, controller 2046 can process information from acoustic sensors 1825-1 and 1825-2. For each detected sound, controller 2046 can perform a direction of arrival (DOA) estimation to estimate a direction from which the detected sound arrived at eyewear device 1802 of AR system 1800. As one or more of acoustic sensors 2025 (e.g., the acoustic sensors 1825-1, 1825-2) detects sounds, controller 2046 can populate an audio data set with the information (e.g., represented as sensor data 2062A and 2062B).

In some embodiments, a physical electronic connector can convey information between eyewear device 1802 and another electronic device and/or between one or more processors 1848, 2048A, 2048B of AR system 1800 or VR system 1900 and controller 2046. The information can be in the form of optical data, electrical data, wireless data, or any other transmittable data form. Moving the processing of information generated by eyewear device 1802 to an intermediary processing device can reduce weight and heat in the eyewear device, making it more comfortable and safer for a user. In some embodiments, an optional wearable accessory device (e.g., an electronic neckband) is coupled to eyewear device 1802 via one or more connectors. The connectors can be wired or wireless connectors and can include electrical and/or non-electrical (e.g., structural) components. In some embodiments, eyewear device 1802 and the wearable accessory device can operate independently without any wired or wireless connection between them.

In some situations, pairing external devices, such as an intermediary processing device (e.g., HIPD 1206, 1306, 1406) with eyewear device 1802 (e.g., as part of AR system 1800) enables eyewear device 1802 to achieve a similar form factor of a pair of glasses while still providing sufficient battery and computation power for expanded capabilities. Some, or all, of the battery power, computational resources, and/or additional features of AR system 1800 can be provided by a paired device or shared between a paired device and eyewear device 1802, thus reducing the weight, heat profile, and form factor of eyewear device 1802 overall while allowing eyewear device 1802 to retain its desired functionality. For example, the wearable accessory device can allow components that would otherwise be included on eyewear device 1802 to be included in the wearable accessory device and/or intermediary processing device, thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on eyewear device 1802 standing alone. Because weight carried in the wearable accessory device can be less invasive to a user than weight carried in the eyewear device 1802, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1800 and/or VR system 1900 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate digital twins (e.g., interactable virtual objects), among a variety of other functions. For example, FIGS. 19A and 19B show VR system 1900 having cameras 1939A to 1939D, which can be used to provide depth information for creating a voxel field and a two-dimensional mesh to provide object information to the user to avoid collisions.

In some embodiments, AR system 1800 and/or VR system 1900 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some embodiments of an artificial reality system, such as AR system 1800 and/or VR system 1900, ambient light (e.g., a live feed of the surrounding environment that a user would normally see) can be passed through a display element of a respective head-wearable device presenting aspects of the AR system. In some embodiments, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the terms "approximately" and "about" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a lens that comprises or includes polycarbonate include embodiments where a lens consists essentially of polycarbonate and embodiments where a lens consists of polycarbonate.

## Claims

1. An optical system comprising:
a Pancharatnam-Berry Phase (PBP) lens configured to diffract light at three distinct wavelengths corresponding to red, green, and blue bands, wherein
the PBP lens includes a multilayer structure with alternating chiral and achiral liquid crystal layers, and
the PBP lens has a transparency of at least 85% to wavelengths outside the red, green, and blue bands.

2. The optical system of claim 1, wherein the PBP lens has a diffraction band full width at half maximum (FWHM) of 12 to 18 nm for the blue band, 20 to 25 nm for the green band, and 30 to 35 nm for the red band.

3. The optical system of claim 1 or claim 2, wherein the multilayer structure comprises a folded Solc architecture including three achiral liquid crystal layers of substantially equal thickness and two chiral liquid crystal layers disposed between the achiral layers, the chiral liquid crystal layers having opposite handedness with equal magnitude twist and each having a physical thickness of less than 100 nm.

4. The optical system of any preceding claim, wherein fast-axis orientations of the achiral liquid crystal layers are arranged in a sequence that is symmetric about a mid-plane of the multilayer structure such that orientation angles in an upper half of the multilayer structure are a mirror of orientation angles in a lower half of the multilayer structure.

5. The optical system of any preceding claim, wherein each achiral liquid crystal layer has a birefringence in a range of approximately 0.08 to 0.20 and a physical thickness in a range of approximately 0.8 µm to 3.0 µm, the birefringence and thickness being selected to set center wavelengths of respective red, green and blue diffraction bands; and/or
wherein each chiral liquid crystal layer has a twist angle with respect to an adjacent achiral layer in a range of approximately ±20° to ±120° and an optical retardance of less than approximately one-quarter wave over the visible electromagnetic spectrum.

6. The optical system of any preceding claim, wherein the multilayer structure begins and ends with an achiral liquid crystal layer.

7. The optical system of any preceding claim, further comprising a notched reflector disposed on a world side of the PBP lens, the notched reflector having reflection bands spectrally aligned with the red, green, and blue diffraction bands of the PBP lens so that world-side light at notched wavelengths is reflected and out-of-band wavelengths are transmitted.

8. An optical display system comprising a stacked optical element including:
a first Pancharatnam-Berry Phase (PBP) lens;
a second PBP lens; and
a third PBP lens,
each of the first, second, and third PBP lenses being a triple-notched diffractive lens configured to diffract light at three distinct wavelengths corresponding to red, green, and blue bands while being transparent to out-of-band wavelengths,
the stacked optical element further including a first color-selective half-wave retarder disposed between the first PBP lens and the second PBP lens and a second color-selective half-wave retarder disposed between the second PBP lens and the third PBP lens.

9. The optical display system of claim 8, wherein each of the first, second, and third PBP lenses comprises a multilayer liquid crystal structure having alternating achiral liquid crystal layers and chiral liquid crystal layers of opposite handedness; and preferably
wherein the achiral liquid crystal layers are configured to provide a spatially varying fast-axis orientation that imparts a geometric-phase profile, and the chiral liquid crystal layers are configured to provide sub-quarter-wave retardance with twist angles selected to shape spectral bandwidth and roll-off without substantially shifting notch centers; and/or
wherein each achiral liquid crystal layer has a birefringence in a range of approximately 0.08 to 0.20 and a physical thickness in a range of approximately 0.8 µm to 3.0 µm, and each chiral liquid crystal layer has a physical thickness of less than 100 nm.

10. The optical display system of claim 8 or claim 9, wherein the first and second color-selective half-wave retarders are configured to selectively modify circular polarization on a per-wavelength basis so that, for at least one of the red, green, and blue bands, light exits the first color-selective half-wave retarder with a handedness that causes the second PBP lens to provide a focusing operation and exits the second color-selective half-wave retarder with a handedness that causes the third PBP lens to provide a defocusing operation, and for at least one other of the red, green, and blue bands, light exits with an opposite handedness to invert a focusing sign of at least one of the second or third PBP lenses, such that combined optical power of the first, second, and third PBP lenses yields substantially equal effective focal lengths for the red, green, and blue bands at an exit pupil.

11. The optical display system of any one of claims 8 to 10, wherein at least one of the PBP lenses has a diffraction band full width at half maximum (FWHM) of 12 to 18 nm for the blue band, 20 to 25 nm for the green band, and 30 to 35 nm for the red band.

12. The optical display system of any one of claims 8 to 11, wherein the stacked optical element is arranged along a common optical axis in a sequence, from an eye side toward a display side, of (i) the first PBP lens, (ii) the first color-selective half-wave retarder, (iii) the second PBP lens, (iv) the second color-selective half-wave retarder, and (v) the third PBP lens, each of the PBP lenses and color-selective half-wave retarders being parallel to one another with coextensive clear apertures, and wherein spatial phase profiles of the first, second, and third PBP lenses are laterally registered about the common optical axis so that corresponding phase features are coincident across the stacked optical element.

13. A Pancharatnam-Berry Phase lens comprising a multilayer liquid crystal stack having alternating achiral liquid crystal layers and chiral liquid crystal layers of opposite handedness, the achiral liquid crystal layers being patterned with a spatially varying fast-axis orientation to impart a geometric-phase profile, the multilayer liquid crystal stack beginning and ending with an achiral liquid crystal layer.

14. The Pancharatnam-Berry Phase lens of claim 13, wherein the multilayer liquid crystal stack is configured as a folded Solc architecture in which the fast-axis orientations of the achiral liquid crystal layers are arranged in a sequence that is symmetric about a mid-plane of the stack.

15. The Pancharatnam-Berry Phase lens of claim 13 or claim 14, wherein each chiral liquid crystal layer is a sub-retardance twist layer disposed between adjacent achiral liquid crystal layers and is selected to tailor spectral bandwidth and roll-off without substantially shifting geometric-phase center wavelengths set by the achiral liquid crystal layers; and/or
wherein each achiral liquid crystal layer has a birefringence in a range of approximately 0.08 to 0.20 and a physical thickness in a range of approximately 0.8 µm to 3.0 µm, and each chiral liquid crystal layer has a physical thickness of less than 100 nm; and/or
wherein the multilayer liquid crystal stack comprises three achiral liquid crystal layers and two chiral liquid crystal layers.
